# EUROPÄISCHE PATENTSCHRIFT

(11) **EP 3 221 124 B1**
(45) Veröffentlichungstag und Bekanntmachung des Hinweises auf die Patenterteilung: **13.06.2018**
(21) Anmeldenummer: 15794882.9
(22) Anmeldetag: 10.11.2015
(51) Int. Cl.: B29C 65/16, B29C 70/38, B29C 35/08, B29K 105/12

(54) **VORRICHTUNG ZUM ERZEUGEN EINER VERSTÄRKUNGSSTRUKTUR AUF EINER FORMKÖRPEROBERFLÄCHE**
DEVICE FOR PRODUCING A REINFORCING STRUCTURE ONTO A MOLDED BODY SURFACE
DISPOSITIF DE PRODUCTION D'UNE STRUCTURE DE RENFORT SUR UNE SURFACE DE CORPS MOULÉ

(30) Priorität: 20.11.2014 DE 102014017085
(43) Veröffentlichungstag der Anmeldung: 27.09.2017
(73) Patentinhaber: Kautex Textron GmbH & Co. KG, 53229 Bonn (DE)
(72) Erfinder: KOK, Jakob Steven Marten, 5161 Sprang-Capelle (NL); KÖLZER, Patrick, 56291 Mühlpfad (DE)
(74) Vertreter: Richly Ritschel
(86) Internationale Anmeldenummer: PCT/EP2015/076264
(87) Internationale Veröffentlichungsnummer: WO 2016/078977

(56) Entgegenhaltungen:
- WO-A1-2010/031364
- WO-A1-2015/145407
- DE-A1-102012 108 487
- US-B1- 6 451 152
- Anonymous: "Vertical-cavity surface-emitting laser - Wikipedia, the free encyclopedia", , 20. Oktober 2014 (2014-10-20), XP055236730, Gefunden im Internet: URL:https://en.wikipedia.org/w/index.php?t itle=Vertical-cavity_surface-emitting_lase r&oldid=630594427 [gefunden am 2015-12-16]
- PISTOR M ET AL: "Crystallinity of on-line consolidated thermoplastic composites", JOURNAL OF COMPOSITE MATERIALS, SAGE PUBLICATIONS, USA, Bd. 33, Nr. 4, 1. Januar 1999 (1999-01-01) , Seiten 306-324, XP009137722, ISSN: 0021-9983

## Beschreibung

Die vorliegende Erfindung betrifft eine Vorrichtung zum Erzeugen einer Verstärkungsstruktur auf einer Formkörperoberfläche.

Als Formkörperoberfläche ist dabei jegliche Fläche bzw. Oberfläche eines beliebig ausgebildeten Substrats oder eines beliebig geformten und dimensionierten Formkörpers zu verstehen.

Aus Gewichtsoptimierungsgründen werden Substrate und/oder Formkörper häufig aus Kunststoffen gebildet. Daher können entsprechend ausgebildete Substrate und/oder Formkörper gewichtstechnisch optimiert sein, jedoch auch eine verminderte Stabilität aufweisen. Zur Erhöhung der Stabilität können die Substrate und/oder Formkörper mit einer Verstärkungsstruktur versehen werden. Diese Verstärkungsstruktur kann beispielsweise aus faserverstärkten Duroplasten oder Thermoplasten gebildet sein.

Ein Beispiel eines Formkörpers bzw. Substrats ist ein Innenbehälter eines Druckbehälters. Der Druckinnenbehälter kann beispielsweise aus einem thermoplastischen Kunststoff gebildet sein kann oder diesen zumindest umfassen. Druckbehälter werden zur Speicherung von unter Druck stehenden Gasen und/oder unter Druck stehenden Flüssigkeiten verwendet. So finden Druckbehälter bereits in mit Erdgas betriebenen Kraftfahrzeugen Anwendung. Ferner sind Druckbehälter für Kraftfahrzeuge bekannt, die mit unter Druck stehendem Wasserstoff gefüllt werden. Der Wasserstoff kann in einem Verbrennungsmotor mit Sauerstoff verbrannt werden oder in einer Brennstoffzelle mit Sauerstoff zu Wasser reagieren, wobei die gewonnene elektrische Energie einem Akkumulator oder einem Elektromotor zugeführt wird.

Entsprechende Druckbehälter müssen großen Belastungen standhalten. Druckbehälter für Erdgas werden beispielsweise mit einem Druck bis hin zu 250 bar befüllt. Druckbehälter für Wasserstoff werden mit bis zu 700 bar befüllt. Daher müssen die Druckinnenbehälter, die den Innenbereich eines solchen Druckbehälters bilden und beispielsweise aus einem thermoplastischen Kunststoff gebildet sind, mit einer Stützstruktur versehen werden, die ein Verstärkung des Druckinnenbehälters ermöglicht, so dass der Druckbehälter Druckbelastungen von bis zu 700 bar standhält.

Aus dem Stand der Technik ist es bekannt, auf einem Formkörper eine Stützstruktur aus thermoplastischem Kunststoff aufzubringen, wobei der thermoplastische Kunststoff faserverstärkt, insbesondere mit Kohlefasern verstärkt ist. Hierbei ist eine zuverlässige und stabile Verbindung zwischen dem Formkörper und der Stützstruktur notwendig.

So beschreibt die US 6,451,152 ein Verfahren zum Erzeugen von Kunststoffartikeln aus einem Kunststoffband. Hierzu werden sich gegenüberliegende Flächen eines Kunststoffbandes und eines Substrats mit von einem Laserdioden-Array abgestrahlten Laserlicht beaufschlagt und erhitzt. Nach dem Aufheizen der jeweiligen Aufheizflächen wird das Kunststoffband auf die Oberfläche des Substrats positioniert und mittels einer Anpresseinrichtung auf das Substrat gedrückt, so dass das Kunststoffband auf dem Substrat haftet. Die US 6,451,152 beschreibt, dass die Oberflächen des Kunststoffbandes und des Substrats ortsaufgelöst mit angepassten Intensitäten bestrahlt werden können, so dass beispielsweise bei einem gebogenem Auflegen des Kunststoffbandes auf dem Substrat der kurveninnere Bereich des Kunststoffbandes stärker aufgeheizt wird, damit sich das Kunststoffband besser in gebogener Form auf dem Substrat ablegen und mit diesem verbinden lässt.

Die US 6,451,152 beschreibt die Verwendung eines Laserdioden-Arrays, welches eine Vielzahl von Laserdioden umfasst, die als sogenannte Kantenemitter ausgebildet sind. Kantenemitter-Laserdioden weisen eine hohe Strahldivergenz auf, was zu Folge hat, dass sich der Durchmesser eines von dem Laserdioden-Array abgestrahlten Lichtkegels schnell mit dem Abstand zum Laserdioden-Array hin vergrößert. Damit die für das Aufheizen der Aufheizflächen des Kunststoffbandes und des Substrats notwendigen Intensitäten erreicht werden können, ist zwischen dem Laserdioden-Array und den zu bestrahlenden Flächen eine als Kollimationsoptik ausgestaltete Abbildungsoptik positioniert. Ohne die Verwendung einer dem Laserdioden-Array optisch nachgeschalteten Abbildungsoptik würde folglich ein Großteil der Laserleistung nicht zum Aufheizen des Kunststoffbandes und/oder des Formkörpers verwendet werden können.

Die Verwendung einer Abbildungsoptik weist jedoch diverse Nachteile auf. Eine entsprechende Abbildungsoptik ist sehr kostenintensiv, was die Kosten der gesamten Vorrichtung erhöht. Weiterhin verschmutzt die Abbildungsoptik im Laufe der Benutzung der Vorrichtung, was eine Säuberung der Abbildungsoptik notwendig macht, welche wiederum eine Betriebspause der Vorrichtung bedingt, wodurch die durchschnittliche Zeit zum Herstellen eines Formkörpers mit einer faserverstärkten Verstärkungsstruktur verlängert wird. Aufgrund der Betriebspause erhöhen sich die Stückkosten der mittels der Vorrichtung hergestellten und eine Verstärkungsstruktur umfassenden Formkörper. Ferner wird durch die Verwendung einer Abbildungsoptik die Komplexität einer Vorrichtung gemäß Oberbegriff der vorliegenden Erfindung erheblich erhöht.

Die der vorliegenden Erfindung zugrunde liegende Aufgabe ist die Bereitstellung einer vereinfachten und kostengünstigeren Vorrichtung zur Erzeugung einer Verstärkungsstruktur auf einer Oberfläche eines Formkörpers, der alternativ auch einfach als Substrat bezeichnet werden kann.

Die der vorliegenden Erfindung zugrunde liegende Aufgabe wird durch eine Vorrichtung zur Erzeugung einer Verstärkungsstruktur auf einer Formkörperoberfläche mit den Merkmalen des Anspruchs 1 gelöst. Vorteilhafte Ausführungen sind in den von Anspruch 1 abhängigen Ansprüchen beschrieben.

Im Genaueren wird die der vorliegenden Erfindung zugrunde liegende Aufgabe durch eine Vorrichtung zur Erzeugung einer Verstärkungsstruktur, die ein faserverstärktes und thermoplastischen Kunststoff umfassendes Band umfasst, auf einer Formkörperoberfläche erzielt. Die Vorrichtung umfasst dabei eine Anpresseinrichtung zum Anpressen des Bandes auf die Formkörperoberfläche. Das Band ist zwischen der Anpresseinrichtung und der Formkörperoberfläche derart positionierbar, dass ein Anpressabschnitt des Bandes mit der Anpresseinrichtung und der Formkörperoberfläche in Kontakt bringbar ist, so dass das Band mittels der Anpresseinrichtung in Richtung der Formkörperoberfläche kraftbeaufschlagbar ist. Das Band ist folglich zwischen der Anpresseinrichtung und der Formkörperoberfläche sandwichartig angeordnet. Die Vorrichtung umfasst ferner eine Verfahr- und/oder Dreheinrichtung, die mit dem Formkörper und/oder mit der Anpresseinrichtung bewegungsgekoppelt ist, so dass eine Relativbewegung und/oder eine Relativdrehung des Formkörpers zur Anpresseinrichtung erzielbar ist, wodurch das Band auf der Formkörperoberfläche aufbringbar ist, wobei sich die Anpresseinrichtung zur Formkörperoberfläche in einer Relativbewegungsrichtung bewegt und das Band bezüglich der Anpresseinrichtung in einer Zugrichtung gezogen wird. Weiterhin umfasst die Vorrichtung zumindest ein Laserdioden-Array mit einer Vielzahl von Laserdioden zum Bestrahlen einer in Zugrichtung dem Anpressbereich des Bandes vorgelagerten Aufheizfläche des Bandes und/oder einer in Relativbewegungsrichtung dem Anpressbereich nachgelagerten Aufheizfläche des Formkörpers. Durch Bestrahlen mittels des Laserdioden-Arrays ist das Band im Bereich dessen Aufheizfläche und/oder die Formkörperoberfläche im Bereich deren Aufheizfläche lokal aufschmelzbar, so dass durch Anpressen des Bandes auf der Formkörperoberfläche mittels der Anpresseinrichtung das Band mit dem Formkörper verbindbar ist. Die erfindungsgemäße Vorrichtung ist dadurch gekennzeichnet, dass die Abstrahlrichtungsvektoren von zumindest zwei Laserdioden zueinander nicht parallel ausgerichtet sind und in Richtung der Aufheizfläche bzw. der Aufheizflächen aufeinander zu gerichtet sind.

Dadurch wird eine erhöhte Strahlungsintensität auf der Aufheizfläche / auf den Aufheizflächen realisierbar, denn die Strahldivergenz der einzelnen Laserdioden kann so durch die Anordnung der Laserdioden zumindest teilweise kompensiert werden. Ferner ist es durch eine entsprechende Ausbildung der Vorrichtung möglich, dass das Laserdioden-Array hin zu den Aufheizflächen des Bandes und/oder des Formkörpers einen größeren Abstand aufweist. Ferner kann dadurch ermöglicht sein, dass zwischen den Laserdioden-Array und der Aufheizfläche beziehungsweise den Aufheizflächen keine gesonderte Kollimationsoptik notwendig ist, um für die Aufheizung notwendige Intensitäten auf den Aufheizflächen zu erreichen. Die gesamte Vorrichtung wird dadurch erheblich vereinfacht und auch in ihren Kosten günstiger.

Dabei ist der Abstrahlrichtungsvektor einer Laserdiode der Vektor, der sich an die Emitteroberfläche der Laserdiode direkt anschließt, nicht jedoch ein Vektor hinter einer eventuell hinter der Laserdiode angeordneten Linse.

Die Wellenlänge des von dem Laserdioden-Array abgestrahlten Laserlichtes liegt vorzugsweise im Infrarotbereich. Beispielsweise kann die Wellenlänge im Bereich von 780 nm und 1.500 nm liegen. Die Verwendung von Infrarotstrahlung ist besonders vorteilhaft, da Infrarotstrahlung durch thermoplastischen Kunststoff besonders gut absorbiert wird.

Die Verfahr- und/oder Dreheinrichtung kann beispielsweise eine Handhabungseinrichtung, so wie beispielsweise ein Roboter, zum Bewegen und/oder zum Drehen der Anpresseinrichtung und eine weitere Handhabungseinrichtung zum Bewegen und/oder Drehen des Formkörpers umfassen.

Der Formkörper kann dabei eine beliebige Geometrie aufweisen. Im einfachsten Fall ist der Formkörper als ein flaches Substrat ausgebildet. Selbstverständlich ist es auch möglich, dass der Formkörper komplexere Geometrien, beispielsweise eine zylinderförmige Geometrie aufweist, die insbesondere ein Innenbehälter eines Druckbehälters aufweist.

Wenn beispielsweise ein Innenbehälter mit einer Verstärkungsstruktur versehen werden soll, dann kann die Verfahr- und/oder Dreheinrichtung einen Roboterarm umfassen, auf der das Laserdioden-Array angeordnet ist. Ferner kann dann die Verfahr- und/oder Dreheinrichtung eine Drehspindel umfassen, auf der der Druckbehälter beziehungsweise der Innenbehälter angeordnet ist. Der Behälter ist mittels der Drehspindel bezüglich dessen Längsachse drehbar. Die Drehspindel selber kann ferner um eine zur Längsachse des Innenbehälters senkrechten Rotationsachse drehbar sein. Der Formkörper, beispielsweise ein Innenbehälter eins zu fertigenden Druckbehälters, kann insbesondere aus einem thermoplastischen Material gebildet sein oder diesen zumindest umfassen. Beispielsweise kann eine Außenfläche des Formkörpers aus einem thermoplastischen Material bestehen. In diesem Fall erfolgt eine stoffschlüssige Verbindung zwischen dem Band und dem Formkörper.

Selbstverständlich kann der Formkörper aber auch aus einem Metall bestehen, wobei in diesem Fall die Verbindung zwischen dem Band und dem Formkörper form- und/oder kraftschlüssig erfolgt.

Die auf der Formkörperoberfläche aufzubringende Verstärkungsstruktur kann auch als Stützstruktur oder als Versteifungsstruktur bezeichnet werden.

Die Vorrichtung ist vorzugsweise derart ausgestaltet, dass diese ein Laserdioden-Array umfassendes Bestrahlungsmodul umfasst, das wiederum zumindest zwei jeweils der Aufheizfläche des Bandes und/oder der Aufheizfläche des Formkörpers zugewandte Abstrahlflächen aufweist. In jeder der Abstrahlflächen ist mindestens eine Laserdiode des Laserdioden-Arrays angeordnet, wobei der Abstrahlrichtungsvektor der Laserdiode parallel zum Normalenvektor der Abstrahlfläche orientiert ist. Ein von zwei benachbarten Abstrahlflächen eingeschlossener Winkel ist dabei veränderbar.

Die vorliegende Erfindung ist jedoch nicht darauf begrenzt, dass lediglich ein Winkel von zwei zueinander benachbarten Abstrahlflächen variabel bzw. veränderbar ist. Vielmehr können alle Winkel von Abstrahlflächen des Bestrahlungsmoduls eingestellt bzw. verändert werden. Die Veränderung der Winkel von zueinander benachbarten Abstrahlflächen kann elektromechanisch erfolgen. Beispielsweise können einzelne Bestandteile des Bestrahlungsmoduls auf Drehtischen angeordnet sein, sodass die Winkelorientierung von einzelnen Segmenten des Bestrahlungsmoduls zueinander so verändert werden können. Auch eine Veränderung der Winkelposition der einzelnen Segmente des Bestrahlungsmoduls mittels Piezo-Elementen ist möglich.

Übliche Winkelvariationen der einzelnen Segmente des Bestrahlungsmoduls liegen üblicherweise im Winkelbereich zwischen 0,1 °und 10°. Weiter vorzugsweise liegen die Winkelvariationen zwischen den einzelnen Segmenten des Bestrahlungsmoduls zwischen 0,1 ° und 5°. Weiter vorzugsweise liegen die Winkelvariationen zwischen den einzelnen Segmenten zwischen 0,2° und 3°. Höchst vorzugsweise liegen die Winkelvariationen zwischen 0,3° und 1 °.

Durch eine entsprechende Ausbildung der erfindungsgemäßen Vorrichtung kann das Intensitätsprofil auf der Aufheizfläche bzw. auf den Aufheizflächen nicht lediglich nur durch eine Veränderung der Stromstärke der einzelnen Laserdioden erfolgen, sondern vielmehr kann zusätzlich oder alternativ auch durch eine Winkelvariationen der einzelnen Segmente unterschiedliche von den jeweiligen Laserdioden abgestrahlte Strahlkegel miteinander überlappen, sodass dadurch eine weitere Veränderbarkeit des Intensitätsprofils auf der Aufheizfläche bzw. auf den Aufheizflächen erfolgen kann.

Eine entsprechend ausgebildete Vorrichtung zur Erzeugung einer Verstärkungsstruktur auf einer Formkörperoberfläche ist nochmals flexibler auf unterschiedliche Geometrien von Formkörpern einstellbar. Ferner können mit einer entsprechend ausgebildeten Vorrichtung auch unterschiedlich breite Bänder aufgeheizt werden, ohne dass unnötigerweise das Band umgebendes Material auch mit Laserstrahlung beaufschlagt wird.

Die Vorrichtung ist vorzugsweise derart ausgestaltet, dass diese ein Laserdioden-Array umfassendes Bestrahlungsmodul umfasst, das wiederum zumindest zwei jeweils der Aufheizfläche des Bandes und/oder der Aufheizfläche des Formkörpers zugewandte Abstrahlflächen aufweist. In jeder der Abstrahlflächen ist mindestens eine Laserdiode des Laserdioden-Arrays angeordnet, wobei der Abstrahlrichtungsvektor der Laserdiode parallel zum Normalenvektor der Abstrahlfläche orientiert ist. Die Normalenvektoren der Abstrahlflächen sind dabei zueinander nicht parallel ausgerichtet und in Richtung der Aufheizfläche / der Aufheizflächen aufeinander zu gerichtet.

Beispielsweise können die einzelnen segmentierten Abstrahlflächen des Bestrahlungsmoduls von einer konkaven Einhüllenden begrenzt sein.

In einer weiteren bevorzugten Ausführung ist die Vorrichtung derart ausgebildet, dass diese ein Laserdioden-Array umfassendes Bestrahlungsmodul umfasst, das zumindest eine der Aufheizfläche des Bandes und/oder der Aufheizfläche des Formkörpers zugewandte Abstrahlfläche aufweist. Die Abstrahlfläche ist beziehungsweise die Abstrahlflächen sind dabei konkav ausgebildet und die Laserdioden der Laserdioden-Arrays sind im Abstand zueinander in der Abstrahlfläche angeordnet, wobei die jeweiligen Abstrahlrichtungsvektoren der Laserdioden parallel zu dem lokalen Normalenvektoren der sie umgebenden Abstrahlfläche orientiert sind, so dass die Abstrahlrichtungsvektoren von zumindest zwei Laserdioden zueinander nicht parallel ausgerichtet und in Richtung der Aufheizfläche / der Aufheizflächen aufeinander zugerichtet sind.

Die zwei zuletzt beschriebenen Ausführungen der Vorrichtung bieten den Vorteil, dass die Strahldivergenz der einzelnen Laserdioden ausgeglichen werden kann, so dass erhöhte Laserlichtintensitäten auf den Aufheizflächen des Bandes und des Formkörpers realisierbar sind. Ferner wird dadurch ermöglich, dass eine Abbildungsoptik zwischen dem Laserdioden-Array und der Aufheizfläche des Bandes beziehungsweise der Aufheizfläche des Körpers vermeidbar ist.

Die Vorrichtung ist vorzugsweise derart ausgebildet, dass die Laserdioden des Laserdioden-Arrays zueinander zumindest teilweise nicht äquidistant zueinander beabstandet sind.

Durch die nicht äquidistante Beabstandung der Laserdioden kann die ungleichmäßige Strahlungsintensität auf der Aufheizfläche des Bandes und/oder auf der Aufheizfläche des Formkörpers realisiert beziehungsweise unterstützt werden. Ferner kann durch eine ungleichmäßige Beabstandung der Laserdioden zueinander eine gewünschte, beispielsweise gleichmäßige Intensitätsverteilung auf den Aufheizflächen trotz nicht parallel verlaufender Abstrahlrichtungsvektoren erzielt werden.

Beispielsweise können Abstände zwischen Laserdioden, die unter einem größeren Winkel auf die Aufheizflächen strahlen, die Abstände zwischen diesen Laserdioden kleiner sein als die Abstände zwischen den Laserdioden, die unter einem spitzeren Winkel oder annähernd senkrecht auf die Aufheizflächen strahlen.

Vorzugsweise ist die Vorrichtung derart ausgebildet, dass die Laserdioden des Laserdioden-Arrays als Oberflächenemitter ausgebildet sind.

Durch Verwenden von Oberflächenemittern, die auch als Oberflächenemitter-Laserdioden beziehungsweise VCSEL (Englisch: vertical-cavity-surface-emitting laser) bezeichnet werden können, können höhere Strahlungsleistungen pro Flächeneinheit auf dem Band und/oder auf dem Formkörper realisiert werden, ohne das notwendigerweise eine Abbildungsoptik zwischen dem Laserdioden-Array und dem Band und/oder dem Formkörper angeordnet sein muss. Denn die Strahldivergenz von Oberflächenemittern ist erheblich kleiner als die Strahldivergenz von sogenannten Kantenemittern.

Folglich ist es auch möglich, bei einer entsprechend ausgebildeten Vorrichtung einen Abstand zwischen dem Laserdioden-Array und der Aufheizfläche beziehungsweise den Aufheizfläche des Bandes und des Formkörpers zu vergrößern.

Weiter vorzugsweise ist es aber auch möglich, dass zwischen dem Laserdioden-Array und der Aufheizfläche des Kunststoffbandes und/oder der Aufheizfläche des Formkörpers eine Kollimationsabbildungsoptik angeordnet ist. Durch Verwenden der Kollimationsabbildungsoptik können nochmals erhöhte Strahlintensitäten auf den Aufheizflächen des Bandes und/oder des Formkörpers realisiert werden.

Vorzugsweise sind die Emissionsleistungen der einzelnen Laserdioden des Laserdioden-Arrays mittels einer Steuerungseinrichtung separat einstellbar.

Dadurch wird es ermöglicht, dass im Falle einer Ermittlung der Temperaturen der Aufheizflächen des Bandes und des Formkörpers in Abhängigkeit der jeweiligen Temperaturen die einzelnen Laserdioden entsprechend gesteuert werden, so dass im Kontaktbereich des Kunststoffbandes mit der Formkörperoberfläche diese vorzugsweise identische Temperaturen aufweisen. Dies kann in einer beispielsweise geschlossenen Rückkoppelstruktur erfolgen.

Vorzugsweise ist das Laserdioden-Array dazu angepasst, ein Strahlungsfeld abzustrahlen, dass eine derart ungleichmäßige Intensitätsverteilung auf der Aufheizfläche des Bandes bewirkt wird, dass die Strahlungsintensität auf der Aufheizfläche des Bandes in Zugrichtung zumindest abschnittsweise abnimmt.

Durch eine entsprechende Heizstrategie, bei der die Strahlungsintensität auf der Aufheizfläche des Bandes in Zugrichtung zumindest abschnittsweise abnimmt, wird die bestrahlte Seite des Bandes am Anfang der Aufheizfläche, das heißt in dem Bereich der Aufheizfläche, die am weitesten von der Formkörperoberfläche entfernt ist, stärker aufgeheizt als kurz vor dem Anpressbereich. Dies führt dazu, dass das Band über dessen Dickenerstreckung besser thermalisieren kann, d.h. die Temperatur der Rückseite des Bandes kann sich besser der Temperatur der bestrahlten Vorderseite des Bandes anpassen. Dadurch ergibt sich eine gleichmäßigere Temperaturverteilung über die Dickenerstreckung des Bandes. Aufgrund der gleichmäßigeren Temperaturverteilung weist das Material des Bandes über dessen Dickenerstreckung eine gleichmäßigere Viskosität auf, so dass durch Anpressen des Bandes auf die Formkörperoberfläche bzw. auf die bereits gebildete Verstärkungsstruktur das Band weniger mechanische Spannungen erfährt. Weiterhin weist das Band aufgrund der gleichmäßigeren Temperaturverteilung über dessen Dickenerstreckung nach dem Auskühlen weniger thermische Spannungen auf. Diese beiden Effekte führen dazu, dass die Verbindung des Bandes zu der Formkörperoberfläche bzw. zu der bereits gebildeten Verstärkungsstruktur stabiler ist, so dass der mit der Verstärkungsstruktur versehende Formkörper eine erhöhte Stabilität aufweist.

Der Wirkmechanismus ist dabei wie folgt. Am Anfang der Aufheizfläche des Bandes wird dieses mittels der Laserstrahlung stark aufgeheizt, da die Intensität der Laserstrahlung im Bereich des Anfangs der Aufheizfläche besonders hoch ist. Aufgrund des hohen Temperaturgradienten über die Dickenerstreckung des Bandes erfolgt in Richtung der Dickenerstreckung des Bandes ein beschleunigter Temperaturausgleich. Während des weiteren Aufheizprozesses des Bandes mittels der von dem Laserdioden-Array abgestrahlten Strahlung vermindert sich die Intensität der Laserstrahlung in Richtung der Zugrichtung, so dass die Aufheizfläche verlangsamt aufgeheizt wird. Dadurch wird die Vorderseite des Bandes, das heißt die dem Formkörper zugewandte Seite des Bades, nicht über ein materialspezifische Maximaltemperatur aufgeheizt, wobei gleichzeitig eine Temperaturangleichung der Rückseite zur Vorderseite des Bandes erreicht wird.

Durch eine entsprechend ausgebildete Vorrichtung ist es ferner möglich, auch dickere Bänder zum Erzeugen der Verstärkungsstruktur zu verwenden. Denn aufgrund der erfindungsgemäßen Aufheizstrategie können auch dickere Bänder über deren Dickenerstreckung thermalisieren. Durch das Verwenden von dickeren Bändern, die selbstverständlich auch eine größere Anzahl von Fasern, insbesondere Kohlenstofffasern aufweisen können, müssen für die Fertigung der Verstärkungsstruktur weniger Einzellagen des Bandes auf der Formkörperoberfläche aufgetragen werden, so dass die Zeit zur Herstellung der Verstärkungsstruktur verkürzt wird.

Selbstverständlich ist es nicht notwendig, dass die Strahlungsintensität auf der Aufheizfläche des Bandes in Zugrichtung monoton abnimmt. Auch Strahlungsintensitätsverläufe auf der Aufheizfläche des Bandes in Zugrichtung mit teils ansteigenden Intensitäten in Zugrichtung sind möglich, solange lediglich gewährleistet bleibt, dass die Strahlungsintensität auf der Aufheizfläche des Bandes in Zugrichtung zumindest abschnittsweise abnimmt.

Vorzugsweise umfasst die Vorrichtung ferner eine Aufheizeinrichtung, mittels der das in Zugrichtung der Aufheizfläche vorgelagerte Band auf eine vorgegebene Temperatur aufheizbar ist.

Dadurch wird erreicht, dass über die begrenzte Längenausdehnung der Aufheizfläche des Bandes dieses über eine verkleinerte Temperaturdifferenz zwischen einer Vorderseite und einer Rückseite des Bandes thermalisieren muss. Daher kann das Band über dessen Dickenerstreckung nochmals verbessert thermalisieren, wodurch nochmals geringere mechanische Spannungen beim Anpressen des Bandes und auch geringere thermisch bedingte Spannungen nach Abkühlen des Bandes auf dem Formkörper realisierbar sind. Ferner können nochmals dickere Kunststoffbänder zum Ausbilden der Verstärkungsstruktur verwendet werden, so dass die Herstellungszeit für die Verstärkungsstruktur nochmals reduziert ist.

Als Aufheizeinrichtung kann im einfachsten Fall ein Aufheiztunnel verwendet werden, durch den das Kunststoffband vor dem Aufbringen auf der Formkörperoberfläche hindurchgezogen wird. Ferner können Infrarotdioden verwendet werden, mittels denen die Vorderseite und/oder die Rückseite des Bandes bestrahlbar sind. Auch ein Heizgasstrom für die Vorderseite und die Rückseite des Bandes ist möglich.

Vorzugsweise umfasst die Vorrichtung zusätzlich zum ersten Laserdioden-Array, das dazu ausgelegt ist, die mit dem Formkörper in Kontakt zu bringende Aufheizfläche des Bandes aufzuheizen, ein zweites Laserdioden-Array, das eine Vielzahl von Laserdioden zum Bestrahlen einer der Aufheizfläche des Bandes gegenüberliegenden Rückseite des Bandes umfasst.

Durch das zweite Laserdioden-Array wird erreicht, dass das Band über dessen gesamten Dickenerstreckung nochmals eine gleichmäßige Temperaturverteilung aufweist. Die von dem zweiten Laserdioden-Array bestrahlte Rückseite des Bandes ist vorzugsweise der Aufheizfläche des Bandes direkt gegenüberliegend angeordnet, so dass das Band im Aufheizbereich von dessen zwei Oberflächen aus beheizt wird.

Eine entsprechende Ausbildung der Vorrichtung bewirkt, dass nochmals geringere thermische Spannungen der Verstärkungsstruktur nach Aushärten beziehungsweise Auskühlen erreicht wird, da das Band vor dem Aufbringen und Anpressen auf der Formkörperoberfläche nochmals verbessert thermalisiert ist. Weiterhin ist es bei einer entsprechenden Vorrichtung auch möglich, nochmals dickere Kunststoffbänder zu verwenden, so dass eine geringere Zykluszeit zum Herstellen des die Verstärkungsstruktur aufweisenden Erzeugnisses realisierbar sind.

Die Vorrichtung ist vorzugsweise derart ausgebildet, dass zumindest das eine Laserdioden-Array zum Bestrahlen der in Relativbewegungsrichtung dem Anpressbereich nachgelagerten Aufheizfläche des Formkörpers angepasst ist, wobei das Laserdioden-Array ferner dazu angepasst ist, ein Strahlungsfeld abzustrahlen, das eine derart ungleichmäßige Intensitätsverteilung auf der Aufheizfläche des Formkörpers bewirkt wird, dass die Strahlungsintensität auf der Aufheizfläche des Formkörpers entgegen der Relativbewegungsrichtung zumindest abschnittsweise abnimmt.

Folglich wird zumindest abschnittsweise die Aufheizfläche des Formkörpers im Anfangsbereich der Aufheizzone zumindest stärker aufgeheizt als zum Ende der Aufheizfläche hin. Dadurch wird erreicht, dass auch die Oberfläche des Formkörpers bis zu einer vorgegebenen Tiefe thermalisieren kann, so dass nach dem Anpressen des Bandes und nach dem Auskühlen der Verstärkungsstruktur und des Bandes die Spannungen in der Verstärkungsstruktur vermindert sind.

Die Vorrichtung kann vorzugsweise derart ausgestaltet sein, dass das Laserdioden-Array / die Laserdioden-Arrays dazu angepasst ist/sind, die jeweiligen Aufheizflächen des Bandes und des Formkörpers in den einer Kontaktlinie des Bandes mit dem Formkörper unmittelbar vorgelagertem Bereich auf verschiedene Temperaturen aufzuheizen.

Dadurch wird es ermöglicht, dass der Formkörper und das Band aus unterschiedlichen thermoplastischen Kunststoffen gebildet sein können oder diese zumindest umfassen, die gegebenenfalls voneinander verschiedene optimale Temperaturen für eine Verschweißung aufweisen.

Vorzugsweise ist die Anpresseinrichtung als Anpressrolle ausgebildet, deren Außenfläche aus einem elastomeren Material gebildet ist, so dass sich beim Anpressen des Bandes auf dem Formkörper beziehungsweise auf die Formkörperoberfläche mittels der Anpressrolle die Kontaktfläche zwischen der Anpressrolle und dem Band mit steigender Kraftbeaufschlagung vergrößert.

Dadurch wird der Verbindungsbereich zwischen dem Kunststoffband und der Formkörperoberfläche vergrößert, so dass eine zeitlich verlängerte Kraftbeaufschlagung des Kontaktbereiches ermöglicht wird, so dass eine innigere Verbindung zwischen dem Kunststoffband und dem Substrat beziehungsweise der Formkörperoberfläche ermöglicht wird. Dies wiederum erhöht nochmals die Stabilität der so erzeugten Verstärkungsstruktur.

Die Vorrichtung ist vorzugsweise derart ausgebildet, dass die Anpresseinrichtung in den mit dem Band und mit dem Formkörper in Kontakt bringbaren Bereich aus einem für die dem Laserdioden-Array / den Laserdioden-Arrays abgestrahlten Strahlung im Wesentlichen transparent ist.

Dadurch wird erreicht, dass die Anpressrolle beziehungsweise die Anpresseinrichtung durch die Laserstrahlung vermindert aufgeheizt wird, was wiederum einen verringerten Wärmeeintrag in den Formkörper bewirkt. Insbesondere in dem Fall, dass der Formkörper aus einem thermoplastischen Kunststoff besteht oder diesen umfasst, wird dadurch die strukturelle Integrität des Formkörpers weniger vermindert.

Das Merkmal, wonach die Anpresseinrichtung für die von dem Laserdioden-Array abgestrahlte Strahlung im Wesentlichen transparent ist, bedeutet dabei, dass die Transmissivität des Materials für die Strahlung größer als 75 %, vorzugsweise größer als 80 %, weiter vorzugsweise größer als 85 %, weiter vorzugsweise größer als 90 % und höchst vorzugsweise größer als 95 % ist.

Die Vorrichtung ist vorzugsweise derart ausgebildet, dass die Verstärkungsstruktur eine Stützhülle eines Druckbehälters und der Formkörper ein Innenbehälter des Druckbehälters ist.

Weitere Vorteile, Einzelheiten und Merkmale der Erfindung ergeben sich nachfolgend aus den erläuterten Ausführungsbeispielen. Dabei zeigen im Einzelnen:
- Figur 1:: Eine räumliche Darstellung eines aufgeschnittenen Druckbehälters;
- Figur 2:: Eine schematische Darstellung einer erfindungsgemäßen Vorrichtung zur Erzeugung einer Verstärkungsstruktur;
- Figur 3:: Eine schematische Schnittdarstellung eines Bestrahlungsmoduls mit in dem Bestrahlungsmodul angeordneten Laserdioden, die Teil eines Laserdioden-Arrays sind;
- Figur 4:: Eine alternative Ausgestaltung des Bestrahlungsmoduls mit einer Vielzahl von an einer Abstrahlfläche des Bestrahlungsmoduls angeordneten Laserdioden;
- Figur 5:: Ein Diagramm zur Darstellung eines Laserlichtintensitätsverlaufes und eines Temperaturverlaufes einer Oberfläche eines Bandes, aus dem die Verstärkungsstruktur gebildet wird;
- Figur 6:: Ein Diagramm zur ortsaufgelösten Darstellung der Temperatur des Bandes an dessen Vorderseite und an dessen Rückseite;
- Figur 7:: Eine Darstellung der Intensitäts- und Temperaturverläufe auf den Aufheizflächen des Bandes und des Formkörpers;
- Figur 8:: Eine schematische Schnittansicht einer erfindungsgemäßen Vorrichtung zur Erzeugung einer Verstärkungsstruktur, wobei als Formkörper ein Innenbehälter eines Druckbehälters dargestellt ist;
- Figur 9:: Eine schematische Schnittdarstellung einer erfindungsgemäßen Vorrichtung gemäß einer weiteren Ausführungsform der vorliegenden Erfindung;
- Figur 10:: Eine räumliche Darstellung der erfindungsgemäßen Vorrichtung zur Erzeugung einer Verstärkungsstruktur; und
- Figur 11:: Die in Figur 8 dargestellte Vorrichtung aus einem anderen Blickwinkel.

In den folgenden Beschreibungen bezeichnen gleiche Bezugszeichen gleiche Bauteile beziehungsweise gleiche Merkmale, so dass eine in Bezug auf eine Figur durchgeführte Beschreibung bezüglich eines Bauteils auch für die anderen Figuren gilt, wodurch eine wiederholende Beschreibung vermieden wird. Ferner sind die diversen Merkmale der einzelnen Ausführungsformen miteinander frei kombinierbar.

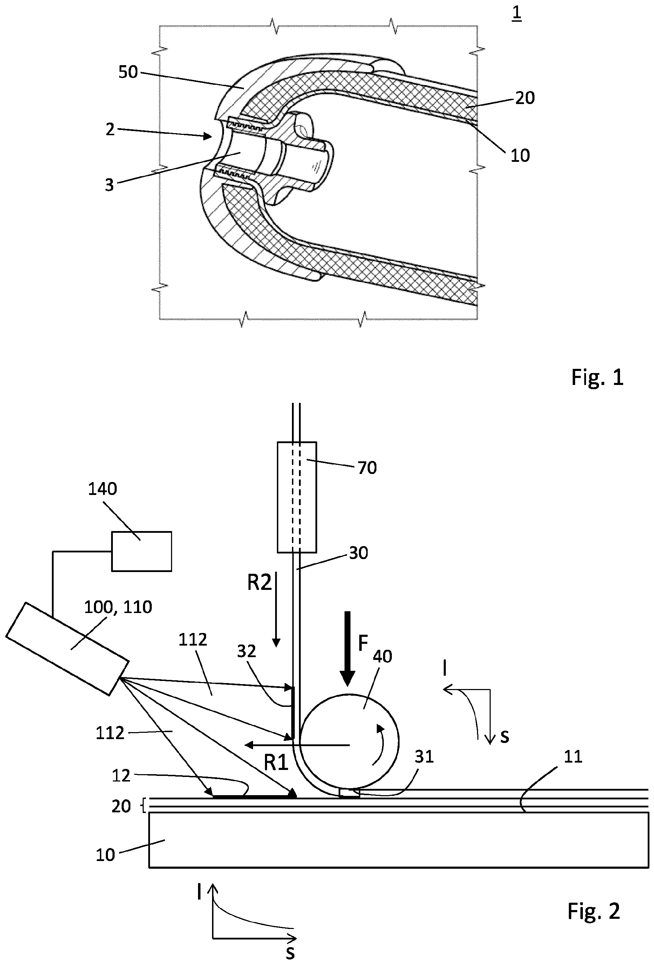

In Figur 1 ist ein Druckbehälter 1 räumlich im Schnitt dargestellt. Der Druckbehälter 1 umfasst einen Innenbehälter 10, der üblicherweise aus einem thermoplastischen Kunststoff besteht. Zumindest jedoch ist eine Außenfläche des Innenbehälters 10 aus einem thermoplastischen Kunststoff gebildet. Wie aus Figur 1 ferner ersichtlich ist, wird eine Öffnung 2 des Druckbehälters 1 durch ein Anschlusselement 3 gebildet. Im Genaueren wird die Öffnung 2 durch einen Halsabschnitt des Anschlusselements 3 gebildet. Ein Schulterabschnitt und ein Halsabschnitt des Anschlusselements 3 sind mit dem Innenbehälter 10 des Druckbehälters 1 beispielsweise stoff- und/oder kraft- und/oder formschlüssig verbunden.

Damit der Druckbehälter 1 auch für die Aufnahme von unter Druck stehenden Gasen oder Flüssigkeiten geeignet ist, muss der Innenbehälter 10 mit einer Verstärkungsstruktur 20 in Form einer Stützhülle 20 versehen werden. Die Stützhülle 20 umschließt dabei den gesamten Innenbehälter 10 des Druckbehälters 1, so dass bei einer Druckbeaufschlagung des Druckbehälters 1 dieser eine erheblich verminderte Expansion aufweist. Ferner wird erst durch Bereitstellen der Stützhülle 20 eine Druckbeaufschlagung des Druckbehälters 1 mit Drücken zwischen 250 bar und 700 bar ermöglicht.

Aus Figur 1 ist ferner ersichtlich, dass der Endbereich des Druckbehälters 1 mit einem Aufprallschutz 50 in Form einer Kappe 50 versehen ist. Die Kappe 50 verteilt axial auf den Druckbehälter 1 ausgeübte Kräfte auf eine größere Fläche. Diese Kräfte mit zumindest einer Axialrichtung können beispielsweise bei einem Unfall oder einem Sturz des Druckbehälters auftreten.

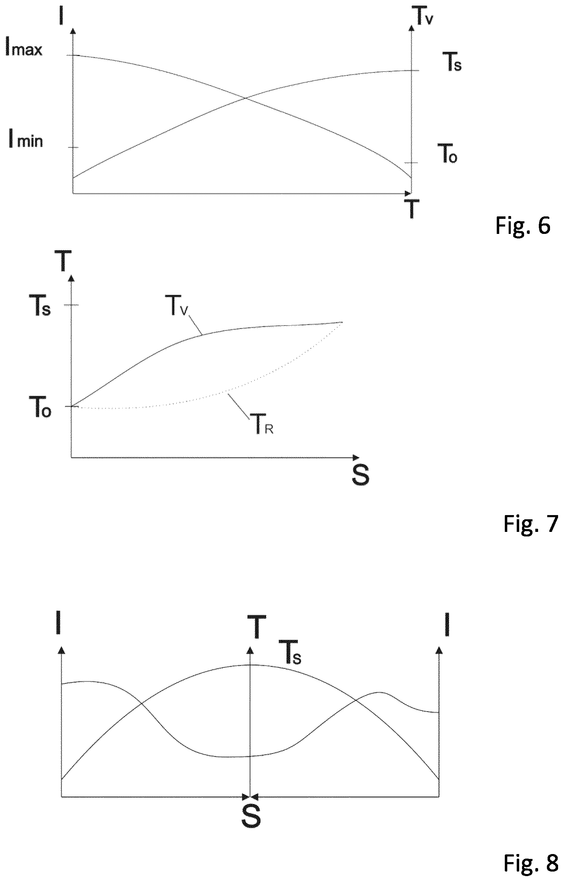

Aus Figur 2 ist in schematischer Darstellung eine Vorrichtung zur Erzeugung einer Verstärkungsstruktur 20, die ein faserverstärktes mit thermoplastischem Kunststoff umfassendes Band 30 umfasst, auf einer Formkörperoberfläche 11 dargestellt. Bei dem in Figur 2 dargestellten Ausführungsbeispiel handelt es sich bei dem Formkörper 10 um ein flaches Substrat 10. Jedoch ist die vorliegende Erfindung nicht darauf beschränkt, ein flaches Substrat 10 mit einer Verstärkungsstruktur 20 zu versehen. Vielmehr können mit der erfindungsgemäßen Vorrichtung beliebig geometrisch ausgebildete und beliebig dimensionierte Substrate 10 beziehungsweise Formkörper 10 mit einer Verstärkungsstruktur 20 versehen werden. So ist es insbesondere mit der erfindungsgemäßen Vorrichtung möglich, einen in Figur 1 dargestellten Innenbehälter 10 mit einer Stützhülle 20 zu versehen, wobei die als Stützhülle 20 ausgebildete Verstärkungsstruktur 20 ein faserverstärktes und thermoplastischen Kunststoff umfassendes Band 30 umfasst. In den Figuren 8 bis 11 ist die erfindungsgemäße Vorrichtung dargestellt, die dazu ausgebildet ist den Innenbehälter 10 des Druckbehälters 1 mit einer Stützhülle 20 zu versehen. Die Faserverstärkung des Bandes 30 kann beispielsweise mittels Glasfasern oder bevorzugterweise mittels Kohlenstofffasern erfolgen.

Zurückkommend zu Figur 2 umfasst die erfindungsgemäße Vorrichtung eine als Anpressrolle 40 ausgebildete Anpresseinrichtung 40 zum Anpressen des Bandes 30 auf die Formkörperoberfläche 11 beziehungsweise auf die Oberfläche 11 der bereits gebildeten Verstärkungsstruktur 20. Das Band 30 ist dabei zwischen dem Formkörper 10 und der Anpressrolle 40 sandwichartig angeordnet. Daher ist das Band 30 zwischen der Anpressrolle 40 und der Formkörperoberfläche 11 derart positioniert, dass ein Anpressabschnitt 31 des Bandes 30 mit der Anpressrolle 40 und der Formkörperoberfläche 11 beziehungsweise mit der Oberfläche einer bereits erzeugten Verstärkungsstruktur 20 in Kontakt steht, so dass das Band 30 mittels der Anpressrolle 40 in Richtung der Formkörperoberfläche 11 kraftbeaufschlagbar ist.

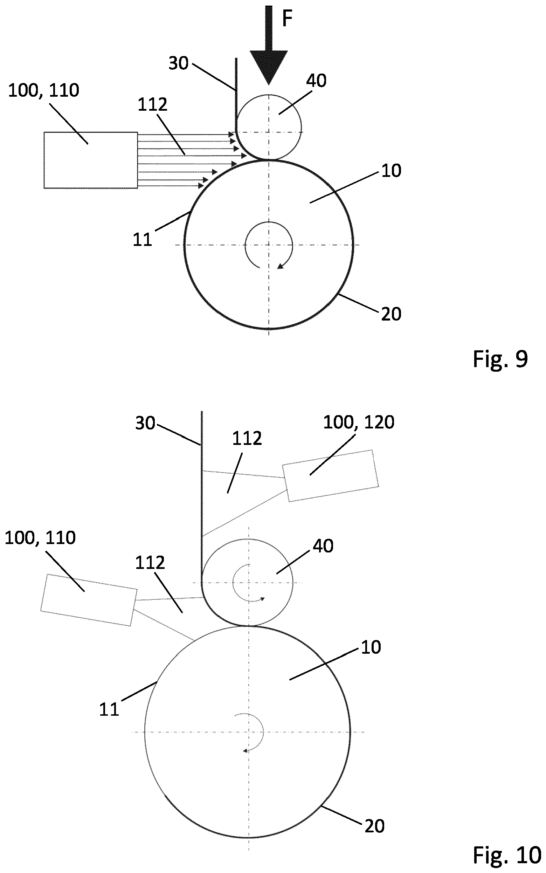

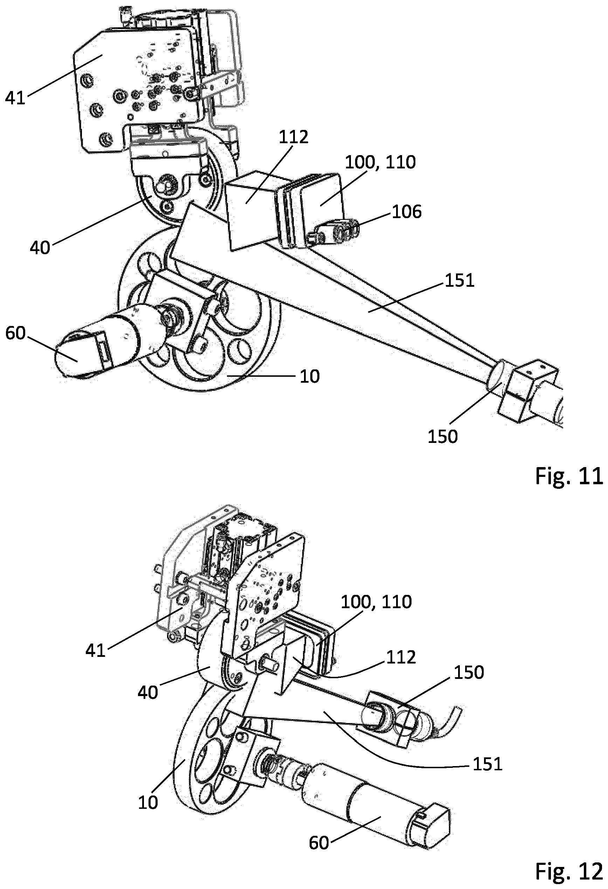

Aus den Figuren 11 und 12 ist ersichtlich, dass die Vorrichtung ferner eine Verfahr- und/oder Dreheinrichtung 60 umfasst, die mit dem Formkörper 10 und/oder mit der Anpressrolle 40 bewegungsgekoppelt ist, so dass eine Relativbewegung und/oder eine Relativdrehung des Formkörpers 10 zur Anpressrolle 40 erzielbar ist. Bei dem in den Figuren 10 und 11 dargestellten Ausführungsbeispiel ist lediglich eine Dreheinrichtung 60 dargestellt, mittels der der Formkörper 10 drehbar ist. Die Verfahr- und/oder Dreheinrichtung 60 umfasst aber ferner auch beispielsweise einen in den Figuren nicht dargestellten Roboterarm, mittels dem ein Bestrahlungsmodul 100 bezüglich der Anpressrolle 40 und bezüglich des Formkörpers 10 verfahrbar und/oder drehbar ist. Die Verfahr- und/oder Dreheinrichtung 60 bewirkt, dass das Band 30 auf der Formkörperoberfläche 11 aufbringbar ist, wobei sich die Anpressrolle 40 zur Formkörperoberfläche 11 in einer Relativbewegungsrichtung R1 bewegt, wodurch das Band 30 wiederum bezüglich der Anpressrolle 40 in einer Zugrichtung R2 beispielsweise von einer in den Figuren nicht dargestellten Vorratsrolle abgezogen bzw. abgerollt wird.

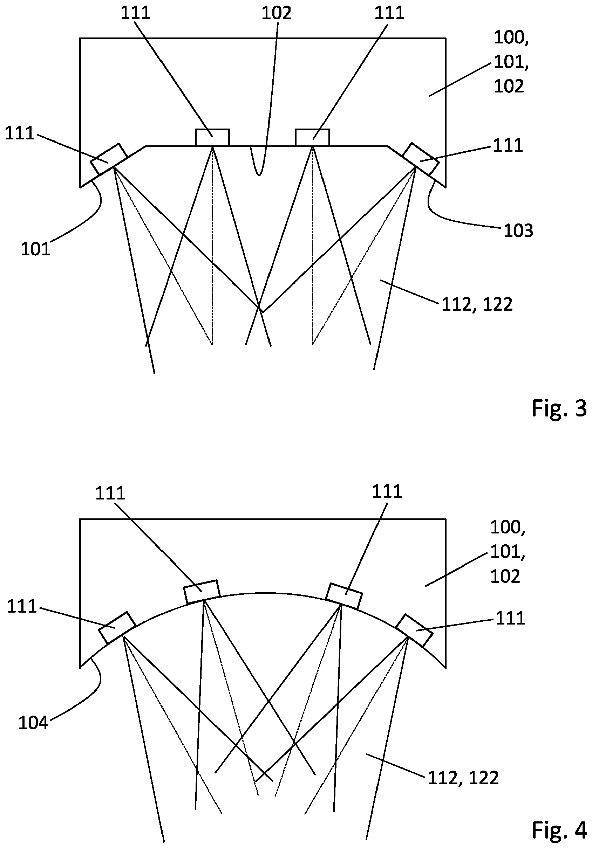

Die Vorrichtung umfasst ferner zumindest ein Bestrahlungsmodul 100, das wiederrum zumindest ein Laserdioden-Array 110 umfasst. Das Laserdioden-Array 110 wiederrum umfasst eine Vielzahl von Laserdioden 111 (siehe Figuren 3 bis 5). Das Bestrahlungsmodul 100 ist einem Kontaktbereich des Bandes 30 mit dem Formkörper 10 gegenüberliegend angeordnet, so dass mittels des Bestrahlungsmoduls 100, im genaueren mittels des Laserdioden-Arrays 110, eine in Zugrichtung R2 dem Anpressbereich 31 des Bandes 30 vorgelagerten Aufheizfläche 32 des Bandes und einer in Relativbewegung R1 dem Anpressbereich 31 nachgelagerten Aufheizfläche 12 des Formkörpers 10 ermöglicht ist. Wie aus Figur 1 ersichtlich ist, erzeugt das Laserdioden-Array 110 zwei Strahlungskegel 112, wobei mittels des oberen dargestellten Strahlungskegels 112 die Aufheizfläche 32 des Bandes 30 und mittels des in Figur 2 unten dargestellten Kegels 112 die Aufheizfläche 12 der Formkörperoberfläche 11 beziehungsweise der bereits gebildeten Verstärkungsstruktur 20 bestrahlt wird.

Selbstverständlich kann von dem Bestrahlungsmodul 100 bzw. von dem Laserdioden-Array 110 auch lediglich nur ein einzelner Strahlungskegel 112 emittiert werden (siehe Figuren 9 bis 12). Ferner kann das von dem Laserdioden-Array 110 emittierte Strahlungsfeld dergestalt sein, dass trotz variablem Auftreffwinkel des Strahlungsfeldes auf dem Band 30 bzw. auf dem Formkörper 10, d.h. wenn die Aufheizfläche 32 bzw. die Aufheizfläche 12 gebogen ausgestaltet ist/sind, die Strahlungsintensität I auf der Aufheizfläche 12 bzw. der Aufheizfläche 32 den gewünschten Wert aufweist. Im Konkreten bedeutet dies, dass trotz variablem Auftreffwinkel der Laserstrahlung auf der Aufheizfläche 12 bzw. der Aufheizfläche 32 die Strahlungsintensität I auf den Aufheizflächen 12, 32 konstant oder zumindest abschnittsweise abfallend oder zumindest abschnittsweise ansteigend sein kann. Beschränkungen bestehen insofern keine.

Durch Bestrahlung der Aufheizfläche 32 des Bandes 30 und der Aufheizfläche 12 des Formkörpers 10 beziehungsweise der Aufheizfläche 12 der bereits gebildeten Verstärkungsstruktur 20 wird das Band 30 im Bereich dessen Aufheizfläche 32 und die Formkörperoberfläche 11 bzw. die Verstärkungsstruktur 20 im Bereich deren Aufheizfläche 12 lokal aufgeschmolzen, so dass durch Anpressen des Bandes 30 mittels der Anpressrolle 40 auf der Formkörperoberfläche 11 das Band 30 mit dem Formkörper 10 verbunden wird. Damit eine innige Verbindung zwischen dem neu auf die bereits gebildete Verstärkungsstruktur 20 aufgebrachten Band 30 und der Verstärkungsstruktur 20 beziehungsweise der Oberfläche des Formkörpers 10 erzielt wird, wird auf die Anpressrolle 40 eine auf die Formkörperoberfläche 11 gerichtete Kraft F ausgeübt.

In Figur 3 ist schematisch im Querschnitt ein Bestrahlungsmodul 100 der erfindungsgenäßen Vorrichtung dargestellt. Es ist ersichtlich, dass das Bestrahlungsmodul drei Abstrahlflächen 101, 102 und 103 aufweist. Dabei sind in der ersten Abstrahlfläche 101 und der dritten Abstrahlfläche 103 jeweils eine Laserdiode 111 angeordnet, wohingegen in der zweiten Abstrahlfläche 102 zwei Laserdioden 111 angeordnet sind. Jedoch ist die vorliegende Erfindung auf eine entsprechende Anzahl von Laserdioden nicht beschränkt. Vielmehr sind in den einzelnen Abstrahlflächen eine Vielzahl von Laserdioden 111 angeordnet. Weiterhin ist die vorliegende Erfindung nicht darauf beschränkt, lediglich zwei oder drei Abstrahlflächen aufzuweisen, sondern das Bestrahlungsmodul kann eine Vielzahl von Abstrahlflächen aufweisen, in denen jeweils eine Laserdiode 111 oder eine Vielzahl von Laserdioden 111 angeordnet ist. Die jeweiligen Abstrahlflächen 101, 102 und 103 sind dabei der Aufheizfläche 32 des Bandes und auch der Aufheizfläche 12 des Formkörpers 10 zugewandt.

Aus Figur 3 ist ersichtlich, dass die Normalenvektoren der drei Abstrahlflächen 101, 102 und 103 zueinander nicht parallel verlaufen und in Richtung der Aufheizflächen 12, 32 aufeinander zu gerichtet sind. Folglich sind auch die Abstrahlrichtungsvektoren in den jeweiligen Flächen 101, 102, 103 angeordneten Laserdioden 111 nicht parallel zueinander sondern in Richtung der Aufheizflächen 12, 32 aufeinander zu gerichtet. Dies bewirkt, dass die Strahldivergenz der jeweiligen Laserdioden 111 kompensiert wird, so dass ein größerer Bearbeitungsabstand zwischen dem Bestrahlungsmodul 100 und den Aufheizflächen 12, 32 erzielbar ist und auch weiterhin die für die Aufheizung sowohl des Bandes 30 als auch des Formkörpers 10 notwendigen Intensitäten realisierbar sind. Ferner wird durch eine entsprechende Ausgestaltung des Bestrahlungsmoduls 100 eine Abbildungsoptik bzw. Kollimationsoptik zwischen dem Bestrahlungsmodul 100 und dem Formkörper 10 vermeidbar.

In Figur 4 ist eine Abwandlung des Bestrahlungsmoduls 100 dargestellt, das lediglich eine einzige Abstrahlfläche 104 aufweist, die jedoch konkav ausgebildet ist. In der Abstrahlfläche 104 sind eine Vielzahl von Laserdioden 111 angeordnet, wobei die im Abstand zueinander angeordneten Laserdioden 111 des Laserdioden-Arrays 110 Abstrahlrichtungsvektoren aufweisen, die parallel zu den jeweiligen lokalen Normalenvektoren der sie umgebenden Abstrahlfläche 104 ausgerichtet sind, so dass auch die Abstrahlrichtungsvektoren von den Laserdioden 111 zueinander nicht parallel ausgerichtet sind und in Richtung der Aufheizfläche 12, 32 aufeinander zu gerichtet sind. Dadurch wird erneut erreicht, dass die Strahldivergenz der jeweiligen Laserdioden 111 kompensiert wird, so dass zum einen eine erhöhte Intensität auf den Aufheizflächen 12, 32 erzielbar ist, der Abstand zwischen den Bestrahlungsmodul 100 und den Aufheizflächen 12, 32 vergrößert werden kann und ferner eine Kollimationsoptik zwischen dem Bestrahlungsmodul 100 und den Aufheizflächen 12, 32 nicht unbedingt notwendig ist.

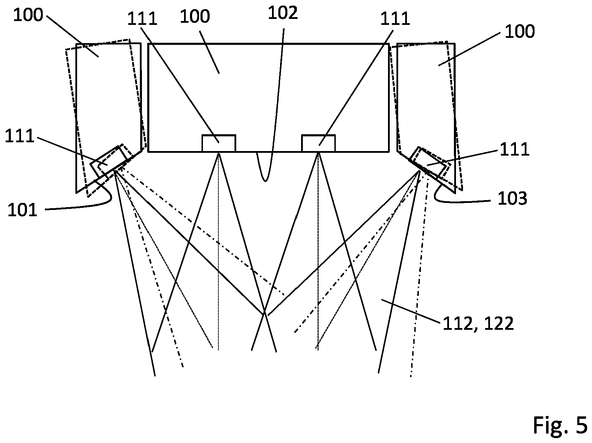

In Figur 5 ist schematisch im Querschnitt eine Abwandlung des Bestrahlungsmoduls 100 dargestellt. Es ist ersichtlich, dass das Bestrahlungsmodul drei Segmente umfasst, die entsprechend drei Abstrahlflächen 101,102 und 103 aufweisen. Dabei sind in der ersten Abstrahlfläche 101 und der dritten Abstrahlfläche 103 jeweils eine Laserdiode 111 angeordnet, wohingegen in der zweiten Abstrahlfläche 102 zwei Laserdioden 111 angeordnet sind. Jedoch ist die vorliegende Erfindung auf eine entsprechende Anzahl von Laserdioden nicht beschränkt. Vielmehr ist in den einzelnen Abstrahlflächen eine Vielzahl von Laserdioden 111 angeordnet. Weiterhin ist die vorliegende Erfindung und insbesondere die vorliegende und in Figur 5 dargestellte Ausführung des Lasermoduls 100 nicht darauf beschränkt, lediglich zwei oder drei Abstrahlflächen aufzuweisen, sondern das Bestrahlungsmodul 100 kann eine Vielzahl von Abstrahlflächen aufweisen, in denen jeweils eine Laserdiode 111 oder eine Vielzahl von Laserdioden 111 angeordnet ist. Die jeweiligen Abstrahlflächen 101,102 und 103 sind dabei der Aufheizfläche 32 des Bandes 30 und auch der Aufheizfläche 12 des Formkörpers 10 zugewandt.

Aus Figur 5 ist ersichtlich, dass die Normalenvektoren der Abstrahlflächen 101,102 und 103 zueinander nicht parallel verlaufen und in Richtung der Aufheizflächen 12,13 aufeinander zu gerichtet sind. Jedoch kann das Bestrahlungsmodul 100 auch dergestalt ausgebildet sein, dass die einzelnen Segmente des Bestrahlungsmoduls bzw. die Abstrahlflächen 101,102 und 103 des Bestrahlungsmoduls 100 parallel zueinander verlaufen.

Ferner zeigt Figur 5, dass die links und rechts angeordneten Segmente des Bestrahlungsmoduls 100 winkelvariabel bezüglich des mittleren Segments des Bestrahlungsmoduls 100 sind, d.h. von zwei benachbarten Abstrahlflächen eingeschlossene Winkel sind veränderbar. Im Genaueren ist der Winkel zwischen der Abstrahlfläche 101 und der Abstrahlfläche 102 veränderbar. In dem dargestellten Ausführungsbeispiel ist das links dargestellte Segment von der Ausgangsstellung entgegen dem Uhrzeigersinn verdreht (gestrichelt dargestelltes Segment), sodass auch der von der links dargestellten Laserdiode 111 abgestrahlte Strahlkegel 112 (in Strichpunkten dargestellt) entgegen des Uhrzeigersinns verdreht ist. Dies bewirkt eine Erhöhung der Intensität in einem bestimmten Bereich der Aufheizfläche 32 bzw. 12, da sich die Strahlkegel auf den Aufheizflächen überlappen. Ferner ist aus Figur 5 ersichtlich, dass das rechts dargestellte Segment des Bestrahlungsmoduls 100 ebenfalls entgegen des Uhrzeigersinns verkippt bzw. verdreht ist. Dies geht mit einer entsprechenden Verkippung des in Figur zwölf rechts dargestellten Streikweges 112 einher (in Strichpunkten dargestellt).

Jedoch ist die vorliegende Erfindung nicht darauf beschränkt, dass die einzelnen Segmente des Bestrahlungsmoduls 100 jeweils gleichorientiert verkippt werden. Eine entgegengesetzt orientierte Verkippung der einzelnen Segmente des Bestrahlungsmoduls 100 ist ebenfalls möglich.

Obschon in Figur nicht 12 dargestellt, kann die Verdrehung bzw. die Verkippung der einzelnen Segmente elektromotorisch erfolgen. Ebenfalls ist ein Antrieb der einzelnen Segmente mittels einer Piezo-Einrichtung möglich. Auch ist es möglich, dass die einzelnen Segmente auf zueinander vertretbaren theoretischen angeordnet sind.

Obschon die einzelnen Laserdioden 111 in unterschiedlichen Segmenten des Bestrahlungsmoduls 100 angeordnet sind, gehören die Laserdioden 111 nichtsdestotrotz zu ein und demselben Laserdioden-Array 110,120.

Jedoch ist es auch möglich, dass in den einzelnen Segmenten des Bestrahlungsmoduls 100 voneinander unterschiedliche Laserdioden-Arrays angeordnet sind. Die Steuerung der unterschiedlichen Laserdioden-Arrays erfolgt dabei auf eine koordinierte Art und Weise, sodass die gewünschten Strahlintensitätsverläufe auf den Aufheizflächen 12, 32 erreicht werden können.

Obschon in den Figuren nicht dargestellt, handelt es sich bei den Laserdioden 111 vorzugsweise jeweils um sogenannte Oberflächenemitter 111, die auch als VCSEL (Englisch: vertical-cavity surface-emitting laser) bezeichnet werden. Entsprechend ausgebildete Laserdioden 111 weisen eine geringere Strahldivergenz auf, so dass erneut die Vorteile erzielt werden, dass erhöhte Intensitäten auf den Aufheizflächen 12, 32 erzielbar sind, der Bearbeitungsabstand zwischen dem Bestrahlungsmodul 100 und den Aufheizflächen 12, 32 vergrößert werden kann, und eine Abbildungsoptik zwischen dem Bestrahlungsmodul 100 und den Aufheizflächen 12, 32 vermieden werden kann.

Zurückkommend zu Figur 2 ist die dort dargestellte Vorrichtung derart ausgestaltet, dass das Laserdioden-Array 110 dazu angepasst ist, ein Strahlungsfeld abzustrahlen, das eine ungleichmäßige Intensitätsverteilung auf der Aufheizfläche 32 des Bandes 30 bewirkt. Die Intensitätsverteilung auf der Aufheizfläche 32 ist dabei dergestalt, dass die Strahlungsintensität auf der Aufheizfläche 30 in Zugrichtung R2 zumindest abschnittsweise abnimmt. Bei dem in Figur 2 rechts schematisch dargestellten Intensitätsverlauf des Strahlungsfeldes auf der Aufheizfläche 32 ist die Intensität über die Längenerstreckung der Aufheizfläche 32 monoton abnehmend dargestellt. Jedoch ist die vorliegende Erfindung auf einen entsprechenden Intensitätsverlauf nicht beschränkt, sondern vielmehr kann das Laserdioden-Array 110 derart ausgestaltet sein, dass beliebige Intensitätsverläufe über die Längenerstreckung der Aufheizfläche 32 ermöglicht sind, solange lediglich gewährleistet bleibt, dass zumindest abschnittsweise, d.h. über einen Teilabschnitt der Längenerstreckung der Aufheizfläche 32, die Intensität abnimmt.

Eine entsprechende Bestrahlung der Aufheizfläche 32 des Bandes 30 bewirkt, dass zu Beginn der Bestrahlung der Aufheizfläche 32, das heißt an dem von dem Formkörper 10 am weitesten entfernten Bereich der Aufheizfläche 32, das Band 30 beziehungsweise die Vorderseite des Bandes 30 maximal aufgeheizt wird, so dass ein großer Temperaturunterschied zwischen einer Vorderseite und einer Rückseite des Bandes 30 besteht. Die Vorderseite des Bandes 30 ist dabei die dem Bestrahlungsmodul 100 zugewandte Seite. Aufgrund des großen Temperaturgradienten zwischen der Vorderseite des Bandes 30 und dessen Rückseite erfolgt eine rasche Thermalisierung des Bandes 30 über dessen Dickenerstreckung. Durch Reduzieren der Bestrahlungsintensität auf der Aufheizfläche 32 in Richtung der Zugrichtung R2 wird die Vorderseite des Bandes 30 weiterhin aufgeheizt bzw. auf einer Temperatur gehalten, jedoch hat die Rückseite des Bandes 30 genügend Zeit, um sich der Temperatur der Vorderseite des Bandes 30 anzugleichen.

Dadurch wird bewirkt, dass ein größtenteils thermalisiertes Band 30 zwischen der Anpressrolle 40 und dem Formkörper 10 beziehungsweise der gebildeten Verstärkungsstruktur 20 angeordnet ist. Aufgrund der Thermalisierung des Bandes 30 über dessen Dickenerstreckung erfolgt durch das Anpressen des Bandes 30 auf der Formkörperoberfläche 11 bzw. auf der Oberfläche der bereits gebildeten Verstärkungsstruktur 20 eine gleichmäßige Verformung des Bandes 30, so dass die Verstärkungsstruktur 20 geringere mechanische Spannungen aufweist. Ferner weist die Verstärkungsstruktur 20 nach Auskühlung eine verminderte Spannung auf, so dass die Verstärkungsstruktur 20 stabiler ausgebildet ist als bei herkömmlichen, aus dem Stand der Technik bekannten Vorrichtungen zur Erzeugung einer Verstärkungsstruktur.

Wie aus Figur 2 ersichtlich ist, ist das Laserdioden-Array 110 ferner dazu ausgebildet, einer in Relativbewegungsrichtung R1 dem Anpressbereich 31 nachgelagerte Aufheizfläche 12 des Formkörpers beziehungsweise der bereits gebildeten Verstärkungsstruktur 20 aufzuheizen. Das Laserdioden-Array 110 ist dabei derart ausgestaltet, dass ein Strahlungsfeld auf der Aufheizfläche 12 erzeugt wird, dass eine derart ungleichmäßige Intensitätsverteilung auf der Aufheizfläche 12 bewirkt wird, dass die Strahlungsintensität auf der Aufheizfläche 12 entgegen der Relativbewegungsrichtung R1 zumindest abschnittsweise abnimmt. Ein Intensitätsverlauf über die Längenerstreckung der Aufheizfläche 12 ist schematisch unterhalb des Formkörpers 10 dargestellt.

Bei dem dargestellten Ausführungsbeispiel ist die Intensität über die Längenerstreckung s der Aufheizfläche 12 monoton abnehmend. Jedoch ist die vorliegende Erfindung auf einen entsprechenden Intensitätsverlauf nicht beschränkt, denn die Intensität kann eine beliebigen, von der Längenerstreckung s abhängigen Verlauf aufweisen, solange lediglich gewährleistet bleibt, dass über einen Abschnitt der Längenerstreckung s der Intensitätsverlauf abnimmt.

Eine entsprechende Ausbildung des Laserdioden-Arrays 110 bewirkt, dass die Oberfläche 11 des Substrats 10 beziehungsweise die Oberfläche 11 der bereits gebildeten Verstärkungsstruktur 20 genügend Zeit hat zu thermalisieren, denn zu Beginn der Längenerstreckung der Aufheizfläche 12 wird diese mit einer hohen Intensität beaufschlagt, so dass ein großer Temperaturunterschied zwischen einer Oberseite und einer Unterseite der Verstärkungsstruktur 20 bedingt ist, so dass eine erhöhte Temperaturübertragung erzielt wird. Über die Längenerstreckung s der Aufheizfläche 12 nimmt die Intensität anschließend kontinuierlich ab, so dass ein geringerer Wärmeeintrag in die bereits gebildete Verstärkungsstruktur 20 erzielt wird.

Durch Anpressen des Bandes 30 im Bereich des Anpressabschnitts 31 wird das aufgeheizte Band 30 mit der aufgeheizten Verstärkungsstruktur 20 verpresst, wobei sowohl das Band 30 über dessen Dickenerstreckung größtenteils thermalisiert ist als auch die Verstärkungsstruktur 20 über eine vorgegebene Dickenerstreckung thermalisiert ist, so dass nach Verpressen des Bandes 30 mit der bereits gebildeten Verstärkungsstruktur 20 und nachfolgender Abkühlung geringe thermische Spannungen verbleiben, so dass die Verstärkungsstruktur 20 eine erhöhte Stabilität aufweist.

Aus Figur 2 ist ersichtlich, dass das Bestrahlungsmodul 100 und insbesondere das Laserdioden-Array 110 mit einer Steuerungseinrichtung 140 zum Übertragen von Daten verbunden ist. Mittels der Steuerungseinrichtung 140 ist die von dem Laserdioden-Array 110 abgegebene Intensität der einzelnen Dioden 111 frei einstellbar.

Obschon in Figur 2 und auch in den anderen Figuren nicht dargestellt, kann die Steuerungseinrichtung 140 ferner mit der Verfahr- und/Dreheinrichtung 60 gekoppelt sein, so dass ein von der relativen Positionierung des Bestrahlungsmoduls 100 zum Formkörper 10 koordiniertes Bestrahlen sowohl des Bandes 30 als auch des Formkörpers 10 beziehungsweise der bereits gebildeten Verstärkungsstruktur 20 ermöglicht ist.

Wie ferner aus Figur 2 ersichtlich ist, umfasst die Vorrichtung ferner eine Aufheizeinrichtung 70, mittels der das in Zugrichtung R2 der Aufheizfläche 32 vorgelagerte Band 30 auf eine vorgegebene Temperatur aufheizbar ist. Die Aufheizeinrichtung 20 kann dabei beispielsweise durch Infrarotstrahler, insbesondere durch Infrarotdioden realisiert sein, die sowohl die Vorderseite als auch die Rückseite des Bandes 30 bestrahlen. Als Aufheizeinrichtung 70 kann aber auch als Ofen 70 realisiert sein, durch den das Band 30 hindurchgezogen wird. Ferner ist es möglich, dass die Aufheizeinrichtung 70 mittels Warmluft das Band 30 an dessen Vorderseite und Rückseite aufheizt.

Die Aufheizeinrichtung 70 bewirkt dabei, dass das Band sowohl auf dessen Vorderseite als auch auf dessen Rückseite und somit auch über dessen Dickenerstreckung auf eine vorgegebene Temperatur aufgeheizt wird, wobei diese Temperatur unterhalb der Schmelztemperatur des thermoplastischen Kunststoffs des Bandes 30 liegt.

Da das Band 30 dann bereits auf eine Temperatur vorgeheizt ist, muss mittels des von dem Laserdioden-Arrays 110 abgegebenen Laserlichtes das Band 30 lediglich noch um eine verringerte Temperatur aufgeheizt werden, um mit der Oberfläche 11 des Formkörpers 10 beziehungsweise der bereits gebildeten Verstärkungsstruktur 20 stoffflüssig verbunden zu werden, beispielsweise durch Verschweißung.

Die Aufheizeinrichtung 70 bewirkt eine nochmals verbesserte Thermalisierung des Bandes 30, wodurch nochmals geringere thermische Spannungen in der Verstärkungsstruktur 20 nach Auskühlung dieser verbleiben, wodurch die Verstärkungsstruktur 20 eine nochmals erhöhte Stabilität aufweist.

Ferner ist es möglich, auch Bänder 30 mit einer größeren Dickenerstreckung zu verwenden, denn das Band 30 ist sowohl auf der Vorderseite als auch auf dessen Rückseite aufgeheizt und somit thermalisiert. Somit können dickere Bänder 30 auf einem Formkörper 10 aufgebracht werden, so dass zum Erstellen einer Verstärkungsstruktur 20 weniger Einzellagen von Bandmaterial notwendig sind, so dass die Zykluszeit zum Herstellen eines eine Verstärkungsstruktur 20 aufweisenden Formkörpers 10 reduziert ist.

Die Wellenlänge des von dem Bestrahlungsmodul 100 und im Genaueren von dem Laserdioden-Arrays 100 abgegebenen Laserlichts ist vorzugsweise im Infrarotbereich, insbesondere im Wellenlängenbereich zwischen 750 nm und 1400 nm. In diesem Wellenlängenbereich weisen die thermoplastischen Kunststoffe, aus denen das Band 30 und der Formkörper 10 gebildet sind, besonders hohe Absorptionskoeffizienten auf.

Die Anpressrolle 40 und insbesondere die Außenfläche der Anpressrolle 40 ist in dem mit dem Band 30 und mit dem Formkörper 10 in Kontakt bringbaren Bereich aus einem für die von dem Laserdioden-Array 110 abgestrahlten Strahlung im Wesentlichen transparent. Ferner kann die Anpressrolle 40 und insbesondere die Außenfläche der Anpressrolle 40 aus einem elastomeren Material gebildet sein, so dass sich beim Anpressen des Bandes 30 auf dem Formkörper 10 mittels der Anpressrolle 40 die Kontaktfläche zwischen der Anpressrolle 40 und dem Band 30 mit steigender Kraftbeaufschlagung vergrößert.

In Figur 6 ist schematisch der Intensitätsverlauf des Strahlungsfeldes auf der Aufheizfläche 32 und der Temperaturverlauf der Vorderseite des Bandes 30 in Abhängigkeit von der Längenerstreckung s der Aufheizfläche 32 dargestellt. Am oberen Ende der Aufheizfläche 32 ist die Intensität maximal, so dass die Vorderseite des Bandes 30 maximal aufgeheizt wird. Folglich ist der Temperaturgradient zu Beginn der Aufheizfläche 32 auch maximal groß. In Zugrichtung R2, das heißt in der auf den Formkörper zugewandten Längenerstreckung der Aufheizfläche 32 nimmt die Intensität kontinuierlich von der maximalen Intensität Imax hin zu einer minimalen Intensität Imin ab, so dass die Temperatur der Vorderseite des Bandes 30 in Zugrichtung R2 langsamer zunimmt, bis die Temperatur der Vorderseite von der Starttemperatur T0 des Bandes 30 auf eine Solltemperatur Ts aufgeheizt ist.

In Figur 7 ist schematisch der Temperaturverlauf der Vorderseite des Bandes Tv und der Temperatur der Rückseite Tr des Bandes 30 dargestellt. Es ist ersichtlich, dass die Temperatur der Vorderseite Tv relativ schnell auf die Solltemperatur Ts aufgeheizt wird und die Temperatur der Rückseite Tr des Bandes 30 verzögert auf die Solltemperatur Ts ansteigt. Jedoch ist ersichtlich, dass am Ende der Längenerstreckung der Aufheizfläche 32 die Temperatur der Vorderseite Tv und die Temperatur der Rückseite Tr des Bandes 30 im Wesentlichen identisch zueinander sind.

In Figur 7 ist schematisch der Intensitätsverlauf und der Temperaturverlauf für die Aufheizfläche 32 des Bandes 30 in der Längenerstreckung s als auch der Intensitätsverlauf und der Temperaturverlauf entlang der Längenerstreckung s entgegen der Relativbewegungsrichtung R1 der Aufheizfläche 12 der bereits gebildeten Verstärkungsstruktur 20 dargestellt. Aus Figur 8 ist ersichtlich, dass der Intensitätsverlauf auf der Aufheizfläche 32 des Bandes 30 von einer hohen Intensität I auf eine niedrigere Intensität I abfällt, wobei die Temperatur des Bandes stetig von einer Anfangstemperatur auf eine Solltemperatur Ts ansteigt. Selbiges gilt für den Intensitätsverlauf auf der Aufheizfläche 12. Die Intensität nimmt entgegen der Relativbewegungsrichtung R1 kontinuierlich ab, wohingegen die Temperatur der Aufheizfläche 12 kontinuierlich entgegen der Relativbewegungsrichtung R1 zunimmt, nämlich auf die Solltemperatur Ts.

Sowohl das Band 30 als auch die Oberfläche 11 des Formkörpers 10 beziehungsweise die Oberfläche der bereits gebildeten Verstärkungsstruktur 20 werden auf vorzugsweise die gleiche Temperatur Ts aufgeheizt, so dass nach Abkühlen der Verstärkungsstruktur 20 minimale und nach Möglichkeit keine thermische Spannungen verbleiben.

In Figur 9 ist in vereinfachter Form nochmals die Vorrichtung aus Figur 1 dargestellt, wobei als Formkörper 10 nunmehr ein im Querschnitt dargestellter Innenbehälter 10 eines Druckbehälters 1 dargestellt ist. Ferner ist das Laserdioden-Array 110 dazu ausgebildet, lediglich einen einzigen Strahlungskegel 112 abzustrahlen, mittels dem sowohl das Band 30 als auch der Innenbehälter 10 beziehungsweise die bereits auf dem Innenbehälter 10 gebildete Verstärkungsstruktur 20 bestrahlt wird. Die übrige Funktionalität ist jedoch identisch mit der Funktionalität der in Figur 2 dargestellten Vorrichtung, so dass auf die Beschreibung für Figur 2 verwiesen wird.

In Figur 10 ist eine weitere Ausführung der erfindungsgemäßen Vorrichtung dargestellt, die zusätzlich zu dem ersten Laserdioden-Array 110 ein zweites Laserdioden-Array 120 umfasst. Auch das zweite Laserdioden-Array 120 umfasst eine Vielzahl von Laserdioden 111, die zum Bestrahlen einer der Aufheizfläche 32 des Bandes 30 gegenüberliegenden Rückseite des Bandes 30 ausgebildet sind. Durch eine entsprechende Ausbildung der Vorrichtung wird erreicht, dass die Temperatur der Vorderseite des Bandes 30 und der Rückseite des Bandes 30 nochmals verbessert an einander angeglichen werden können, was eine stabilere Verstärkungsstruktur 20 nach Auskühlen der Verstärkungsstruktur 20 bewirkt, da geringere thermische Spannungen in der Verstärkungsstruktur 20 verbleiben. Ferner ist aus Figur 10 ersichtlich, dass das erste Laserdioden-Array 110 lediglich einen einzigen Strahlungskegel 112 emittiert, der sowohl das Band 30 als auch den Formkörper 10 bzw. die die bereits gebildete Verstärkungsstruktur 20 bestrahlt.

In den Figuren 11 und 12 ist in räumlicher Darstellung die in den Figuren 2 und 9 dargestellte Vorrichtung dargestellt. Dabei ist ersichtlich, dass die Anpressrolle 40 mittels einer Halteeinrichtung 41 gehalten ist, wobei mittels der Halteeinrichtung 41 eine Druckkraft F auf die Anpressrolle 40 in Richtung des Formkörpers 10 ausgeübt werden kann.

Der Formkörper 10, der in den Figuren 11 und 12 vereinfachterweise als Zylindersegment 10 dargestellt ist, wird mittels der Verfahr- und /oder Dreheinrichtung 60 in Drehung versetzt.

Ferner ist aus den Figuren 11 und 12 ersichtlich, dass an dem Bestrahlungsmodul 100 Kühlwasseranschlüsse 106 vorgesehen sind, mittels denen das Bestrahlungsmodul 100 und die Laserdioden-Arrays 110 kühlbar sind. Das von dem Bestrahlungsmodul 100 abgestrahlte Strahlungsfeld bestrahlt einen Kontaktbereich zwischen der Anpressrolle 40 und dem Formkörper 10.

Das Laserdioden-Array 110 ist derart steuerbar, dass die oben beschriebenen Laserlichtintensitätsverläufe auf der Aufheizfläche 32 und der Aufheizfläche 12 realisiert werden können.

Die Vorrichtung umfasst ferner eine Bildüberwachungseinrichtung 150 in Form einer Infrarotkamera 150, in deren Beobachtungskegel 151 der Kontaktbereich zwischen der Anpressrolle 40 und dem Formkörper 10 angeordnet ist. Somit lässt sich der Temperaturverlauf sowohl des in den Figuren 10 und 11 nicht dargestellten Bandes 30 als auch des Formkörpers 10 beziehungsweise der bereits gebildeten Verstärkungsstruktur 20 ermitteln. Beispielsweise kann über eine Rückkoppelschleife das Laserdioden-Array 110 derart gesteuert werden, dass die Temperatur des Bandes 30 und des Formkörpers 10 beziehungsweise der bereits gebildeten Verstärkungsstruktur 20 auf eine im Wesentlichen identische Temperatur aufgeheizt wird.

### Bezugszeichenliste:

- 1: Druckbehälter
- 2: Öffnung (des Druckbehälters)
- 3: Anschlusselement (des Druckbehälters)
- 10: Formkörper / Substrat / Innenbehälter des Druckbehälters
- 11: Formkörperoberfläche
- 12: Aufheizfläche (des Formkörpers / der Verstärkungsstruktur)
- 20: Verstärkungsstruktur / Stützhülle (eines Druckbehälters)
- 30: Band
- 31: Anpressbereich / Anpressabschnitt (des Bandes)
- 32: Aufheizfläche (des Bandes)
- 40: Anpresseinrichtung, Anpressrolle
- 41: Halteeinrichtung (der Anpresseinrichtung)
- 50: Aufprallschutz
- 60: Verfahr- und/oder Dreheinrichtung
- 70: Aufheizeinrichtung
- 100: Bestrahlungsmodul
- 101, 102, 103: Abstrahlfläche (des Bestrahlungsmoduls)
- 104: Abstrahlfläche (des Bestrahlungsmoduls)
- 106: Kühlwasseranschluss (des Bestrahlungsmoduls)
- 110: (erstes) Laserdioden-Array
- 111: Laserdioden / Oberflächenemitter / VCSEL (des Laserdioden-Arrays)
- 112: Strahlungskegel (des (ersten) Laserdioden-Arrays)
- 120: (zweites) Laserdioden-Array
- 122: Strahlungskegel (des (zweiten) Laserdioden-Arrays)
- 130: Abstrahlrichtungsvektor (einer Laserdiode)
- 140: Steuerungseinrichtung (für das Laserdioden-Array)
- 150: Bildüberwachungseinrichtung / Infrarotkamera
- 151: Beobachtungskegel
- F: Anpresskraft
- I: Strahlungsintensität
- Imin: minimale Strahlungsintensität
- Imax: maximale Strahlungsintensität
- R1: Relativbewegungsrichtung
- R2: Zugrichtung
- s: Aufheizstrecke / Längenausdehnung (der jeweiligen Aufheizflächen)
- Tv: Temperatur der Vorderseite des Bandes
- Tr: Temperatur der Rückseite des Bandes
- Ts: Solltemperatur des Bandes
- T0: Ausgangstemperatur des Bandes

## Patentansprüche

1. Vorrichtung zur Erzeugung einer Verstärkungsstruktur (20), die ein faserverstärktes und thermoplastischen Kunststoff umfassendes Band (30) umfasst, auf einer Formkörperoberfläche (11), wobei die Vorrichtung folgende Merkmale aufweist:
- die Vorrichtung umfasst eine Anpresseinrichtung (40) zum Anpressen des Bandes (30) auf die Formkörperoberfläche (11);
- das Band (30) ist zwischen der Anpresseinrichtung (40) und der Formkörperoberfläche (11) derart positionierbar, dass ein Anpressabschnitt (31) des Bandes (30) mit der Anpresseinrichtung (40) und der Formkörperoberfläche (11) in Kontakt bringbar ist, so dass das Band (30) mittels der Anpresseinrichtung (40) in Richtung der Formkörperoberfläche (11) kraftbeaufschlagbar ist;
- die Vorrichtung umfasst eine Verfahr- und/oder Dreheinrichtung (60), die mit dem Formkörper (10) und/oder mit der Anpresseinrichtung (40) bewegungsgekoppelt ist, so dass eine Relativbewegung und/oder eine Relativdrehung des Formkörpers (10) zur Anpresseinrichtung (40) erzielbar ist, wodurch das Band (30) auf der Formkörperoberfläche (11) aufbringbar ist, wobei sich die Anpresseinrichtung (40) zur Formkörperoberfläche (11) in einer Relativbewegungsrichtung (R1) bewegt und das Band (30) bezüglich der Anpresseinrichtung (40) in einer Zugrichtung (R2) gezogen wird;
- die Vorrichtung umfasst zumindest ein Laserdioden-Array (110, 120) mit einer Vielzahl von Laserdioden (111) zum Bestrahlen einer in Zugrichtung (R2) dem Anpressbereich (31) des Bandes (30) vorgelagerten Aufheizfläche (32) des Bandes (30) und/oder einer in Relativbewegungsrichtung (R1) dem Anpressbereich (31) nachgelagerten Aufheizfläche (12) des Formkörpers (10); und
- durch Bestrahlung mittels des Laserdioden-Arrays (110, 120) ist das Band (30) im Bereich dessen Aufheizfläche (32) und/oder die Formkörperoberfläche (11) im Bereich deren Aufheizfläche (12) lokal aufschmelzbar, so dass durch Anpressen des Bandes (30) auf der Formkörperoberfläche (11) mittels der Anpresseinrichtung (40) das Band (30) mit dem Formkörper (10) verbindbar ist,
wobei die Vorrichtung **dadurch gekennzeichnet ist, dass** die Abstrahlrichtungsvektoren von zumindest zwei Laserdioden (111) zueinander nicht parallel ausgerichtet und in Richtung der Aufheizfläche (12, 32) / der Aufheizflächen (12, 32) aufeinander zu gerichtet sind.

2. Vorrichtung nach einem der vorhergehenden Ansprüche, **gekennzeichnet durch** die folgenden Merkmale:
- die Vorrichtung umfasst ein das Laserdioden-Array (110, 120) umfassendes Bestrahlungsmodul (100);
- das Bestrahlungsmodul (100) weist zumindest zwei jeweils der Aufheizfläche (32) des Bandes (30) und/oder der Aufheizfläche (12) des Formkörpers (10) zugewandte Abstrahlflächen (101, 102, 103) auf;
- in jeder der Abstrahlflächen (101, 102, 103) ist mindestens eine Laserdiode (111) des Laserdioden-Arrays (110, 120) angeordnet, wobei der Abstrahlrichtungsvektor der Laserdiode (111) parallel zum Normalenvektor der Abstrahlfläche (101, 102, 103) orientiert ist; und
- ein von zwei benachbarten Abstrahlflächen (101, 102, 103) eingeschlossener Winkel ist veränderbar.

3. Vorrichtung nach einem der vorhergehenden Ansprüche, **gekennzeichnet durch** die folgenden Merkmale:
- die Vorrichtung umfasst ein das Laserdioden-Array (110, 120) umfassendes Bestrahlungsmodul (100);
- das Bestrahlungsmodul (100) weist zumindest zwei jeweils der Aufheizfläche (32) des Bandes (30) und/oder der Aufheizfläche (12) des Formkörpers (10) zugewandte Abstrahlflächen (101, 102, 103) auf;
- in jeder der Abstrahlflächen (101, 102, 103) ist mindestens eine Laserdiode (111) des Laserdioden-Arrays (110, 120) angeordnet, wobei der Abstrahlrichtungsvektor der Laserdiode (111) die Abstrahlrichtungsvektoren der Laserdioden (111) parallel zum Normalenvektor der Abstrahlfläche (101, 102, 103) orientiert ist / sind; und
- die Normalenvektoren der Abstrahlflächen (101, 102, 103) sind zueinander nicht parallel ausgerichtet und in Richtung der Aufheizfläche (12, 32) / der Aufheizflächen (12, 32) aufeinander zu gerichtet.

4. Vorrichtung nach einem der vorhergehenden Ansprüche, **gekennzeichnet durch** die folgenden Merkmale:
- die Vorrichtung umfasst ein das Laserdioden-Array (110, 120) umfassendes Bestrahlungsmodul (100);
- das Bestrahlungsmodul (100) weist zumindest eine der Aufheizfläche (32) des Bandes (30) und/oder der Aufheizfläche (12) des Formkörpers (10) zugewandte Abstrahlfläche (104) auf;
- die Abstrahlfläche (104) / die Abstrahlflächen (104) ist / sind konkav ausgebildet; und
- die Laserdioden (111) des Laserdioden-Arrays (110, 120) sind im Abstand zueinander in der Abstrahlfläche (104) angeordnet, wobei die jeweiligen Abstrahlrichtungsvektoren der Laserdioden (111) parallel zu den lokalen Normalenvektoren der sie umgebenden Abstrahlfläche (104) orientiert sind, so dass die Abstrahlrichtungsvektoren von zumindest zwei Laserdioden (111) zueinander nicht parallel ausgerichtet und in Richtung der Aufheizfläche (12, 32) / der Aufheizflächen (12, 32) aufeinander zu gerichtet sind.

5. Vorrichtung nach einem der vorhergehenden Ansprüche, **dadurch gekennzeichnet, dass** die Laserdioden (111) des Laserdioden-Arrays (110, 120) zueinander zumindest teilweise nicht äquidistant zueinander beabstandet sind.

6. Vorrichtung nach einem der vorhergehenden Ansprüche, **dadurch gekennzeichnet, dass** die Laserdioden (111) des Laserdioden-Arrays (110, 120) als Oberflächenemitter (111) ausgebildet sind.

7. Vorrichtung nach einem der vorhergehenden Ansprüche, **dadurch gekennzeichnet, dass** dem Laserdioden-Array (110, 120) optisch eine Kollimationsabbildungsoptik nachgeordnet ist.

8. Vorrichtung nach einem der vorhergehenden Ansprüche, **dadurch gekennzeichnet, dass** die Emissionsleistung der einzelnen Laserdioden (111) des Laserdioden-Array (110, 120) mittels einer Steuerungseinrichtung (140) separat einstellbar ist.

9. Vorrichtung nach einem der vorhergehenden Ansprüche, **dadurch gekennzeichnet, dass** das Laserdioden-Array (110, 120) dazu angepasst ist, ein Strahlungsfeld abzustrahlen, das eine derart ungleichmäßige Intensitätsverteilung auf der Aufheizfläche (32) des Bandes (30) bewirkt wird, dass die Strahlungsintensität auf der Aufheizfläche (32) des Bandes (30) in Zugrichtung (R2) zumindest abschnittsweise abnimmt.

10. Vorrichtung nach einem der vorhergehenden Ansprüche, **dadurch gekennzeichnet, dass** die Vorrichtung ferner ein Aufheizeinrichtung (70) umfasst, mittels der das in Zugrichtung (R2) der Aufheizfläche (32) vorgelagerte Band (30) auf eine vorgegebene Temperatur aufheizbar ist.

11. Vorrichtung nach einem der vorhergehenden Ansprüche, **gekennzeichnet durch** die folgenden Merkmale:
- die Vorrichtung umfasst zusätzlich zum ersten Laserdioden-Array (110), das dazu ausgelegt ist, die mit dem Formkörper (10) in Kontakt zu bringende Aufheizfläche (32) des Bandes (32) aufzuheizen, ein zweites Laserdioden-Array (120); und
- das zweite Laserdioden-Array (120) umfasst eine Vielzahl von Laserdioden (111) zum Bestrahlen einer der Aufheizfläche (32) des Bandes (30) gegenüberliegenden Rückseite des Bandes (30).

12. Vorrichtung nach einem der vorhergehenden Ansprüche, wobei das zumindest eine Laserdioden-Array (110, 120) zum Bestrahlen der in Relativbewegungsrichtung (R1) dem Anpressbereich (31) nachgelagerten Aufheizfläche (12) des Formkörpers (10) angepasst ist, **dadurch gekennzeichnet, dass** das Laserdioden-Array (110, 120) dazu ferner angepasst ist, ein Strahlungsfeld abzustrahlen, das eine derart ungleichmäßige Intensitätsverteilung auf der Aufheizfläche (12) des Formkörpers (10) bewirkt wird, dass die Strahlungsintensität auf der Aufheizfläche (12) des Formkörpers (10) entgegen der Relativbewegungsrichtung (R1) zumindest abschnittsweise abnimmt.

13. Vorrichtung nach einem der vorhergehenden Ansprüche, **dadurch gekennzeichnet, dass** das Laserdioden-Array (110, 120) / die Laserdioden-Arrays (110, 120) dazu angepasst ist / sind, die jeweiligen Aufheizflächen (12, 32) des Bandes (30) und des Formkörpers (10) in den einer Kontaktlinie des Bandes (30) mit dem Formkörper (10) unmittelbar vorgelagertem Bereichen auf verschiedene Temperaturen aufzuheizen.

14. Vorrichtung nach einem der vorhergehenden Ansprüche, **dadurch gekennzeichnet, dass** die Anpresseinrichtung (40) als Anpressrolle (40) ausgebildet ist, deren Außenfläche aus einem elastomeren Material gebildet ist, so dass sich beim Anpressen des Bandes (30) auf dem Formkörper (10) mittels der Anpressrolle (40) die Kontaktfläche zwischen der Anpressrolle (40) und dem Band (30) mit steigender Kraftbeaufschlagung vergrößert.

15. Vorrichtung nach einem der vorhergehenden Ansprüche, **dadurch gekennzeichnet, dass** die Anpresseinrichtung (40) in den mit dem Band (30) und mit dem Formkörper (10) in Kontakt bringbaren Bereich aus einem für die von dem Laserdioden-Array (110, 120) / den Laserdioden-Arrays (110, 120) abgestrahlten Strahlung im Wesentlichen transparent ist.

16. Vorrichtung nach einem der vorhergehenden Ansprüche, **dadurch gekennzeichnet, dass** die Verstärkungsstruktur (20) eine Stützhülle (20) eines Druckbehälters (1) und der Formkörper (10) ein Innenbehälter (10) des Druckbehälters (1) ist.

## Claims

1. Device for producing a reinforcing structure (20), which comprises a fiber-reinforced strip (30) including a thermoplastic material, on a molded body surface (11), wherein the device has the following features:
- the device comprises a contact pressure unit (40) for pressing the strip (30) onto the molded body surface (11);
- the strip (30) can be positioned between the contact pressure unit (40) and the molded body surface (11) in such a way that a contact pressure portion (31) of the strip (30) can be brought into contact with the contact pressure unit (30) and the molded body surface (11), with the result that the strip (30) can be subjected to a force in the direction of the molded body surface (11) by means of the contact pressure unit (40);
- the device comprises a translation and/or rotation unit (60), which is coupled in terms of motion to the molded body (10) and/or to the contact pressure unit (40), with the result that a motion and/or a rotation of the molded body (10) relative to the contact pressure unit (40) can be achieved, whereby the strip (30) can be applied to the molded body surface (11), wherein the contact pressure unit (40) moves in a direction of relative motion (R1) with respect to the molded body surface (11), and the strip (30) is pulled in a pulling direction (R2) in relation to the contact pressure unit (40);
- the device comprises at least one laser diode array (110, 120) having a multiplicity of laser diodes (111) for irradiating a heating surface (32) of the strip (30) ahead of the contact pressure region (31) of the strip (30) in the pulling direction (R2), and/or for irradiating a heating surface (12) of the molded body (10) after the contact pressure region (31) in the direction of relative motion (R1); and
- the strip (30) can be melted locally in the region of the heating surface (32) thereof and/or the molded body surface (11) can be melted locally in the region of the heating surface (12) thereof by irradiation by means of the laser diode array (110, 120), thus making it possible to join the strip (30) to the molded body (10) by pressing the strip (30) onto the molded body surface (11) by means of the contact pressure unit (40),
wherein the device is **characterized in that** the emission direction vectors of at least two laser diodes (111) are aligned in a nonparallel manner to one another and are directed toward one another in the direction of the heating surface (12, 32)/heating surfaces (12, 32).

2. Device according to one of the preceding claims, **characterized by** the following features:
- the device comprises an irradiation module (100) comprising the laser diode array (110, 120);
- the irradiation module (100) has at least two emission surfaces (101, 102, 103), each facing the heating surface (32) of the strip (30) and/or the heating surface (12) of the molded body (10);
- at least one laser diode (111) of the laser diode array (110, 120) is arranged in each of the emission surfaces (101, 102, 103), wherein the emission direction vector of the laser diode (111) is oriented parallel to the normal vector of the emission surface (101, 102, 103); and
- an angle enclosed by two adjacent emission surfaces (101, 102, 103) is capable of being changed.

3. Device according to one of the preceding claims, **characterized by** the following features:
- the device comprises an irradiation module (100) comprising the laser diode array (110, 120);
- the irradiation module (100) has at least two emission surfaces (101, 102, 103), each facing the heating surface (32) of the strip (30) and/or the heating surface (12) of the molded body (10);
- at least one laser diode (111) of the laser diode array (110, 120) is arranged in each of the emission surfaces (101, 102, 103), wherein the emission direction vector of the laser diode (111)/the emission direction vectors of the laser diodes (111) is/are oriented parallel to the normal vector of the emission surface (101, 102, 103); and
- the normal vectors of the emission surfaces (101, 102, 103) are aligned in a nonparallel manner to one another and are directed toward one another in the direction of the heating surface (12, 32)/heating surfaces (12, 32).

4. Device according to one of the preceding claims, **characterized by** the following features:
- the device comprises an irradiation module (100) comprising the laser diode array (110, 120);
- the irradiation module (100) has at least one emission surface (104) facing the heating surface (32) of the strip (30) and/or the heating surface (12) of the molded body (10);
- the emission surface (104)/emission surfaces (104) is/are of concave design; and
- the laser diodes (111) of the laser diode arrays (110, 120) are arranged spaced apart in the emission surface (104), wherein the respective emission direction vectors of the laser diodes (111) are oriented parallel to the local normal vectors of the emission surface (104) surrounding them, with the result that the emission direction vectors of at least two laser diodes (111) are aligned in a nonparallel manner to one another and are directed toward one another in the direction of the heating surface (12, 32)/heating surfaces (12, 32).

5. Device according to one of the preceding claims, **characterized in that** the laser diodes (111) of the laser diode array (110, 120) are spaced apart in a non-equidistant manner, at least in some cases.

6. Device according to one of the preceding claims, **characterized in that** the laser diodes (111) of the laser diode array (110, 120) are designed as surface emitters (111).

7. Device according to one of the preceding claims, **characterized in that** collimation imaging optics are arranged optically downstream of the laser diode array (110, 120).

8. Device according to one of the preceding claims, **characterized in that** the emission output of the individual laser diodes (111) of the laser diode array (110, 120) can be set separately by means of a control unit (140).

9. Device according to one of the preceding claims, **characterized in that** the laser diode array (110, 120) is adapted to emit a radiation field which causes such a nonuniform intensity distribution on the heating surface (32) of the strip (30) that the radiation intensity on the heating surface (32) of the strip (30) decreases in the pulling direction (R2), at least in one section.

10. Device according to one of the preceding claims, **characterized in that** the device furthermore comprises a heating unit (70), by means of which the strip (30) ahead of the heating surface (32) in the pulling direction (R2) can be heated to a predetermined temperature.

11. Device according to one of the preceding claims, **characterized by** the following features:
- the device comprises a second laser diode array (120) in addition to the first laser diode array (110), the latter being designed to heat the heating surface (32) of the strip (32), which heating surface is to be brought into contact with the molded body (10); and
- the second laser diode array (120) comprises a multiplicity of laser diodes (111) for irradiating a rear side of the strip (30) situated opposite the heating surface (32) of the strip (30).

12. Device according to one of the preceding claims, wherein the at least one laser diode array (110, 120) is adapted to irradiate the heating surface (12) of the molded body (10) after the contact pressure region (31) in the direction of relative motion (R1), **characterized in that** the laser diode array (110, 120) is furthermore adapted to emit a radiation field which causes such a nonuniform intensity distribution on the heating surface (12) of the molded body (10) that the radiation intensity on the heating surface (32) of the molded body (10) decreases counter to the direction of relative motion (R1), at least in one section.

13. Device according to one of the preceding claims, **characterized in that** the laser diode array (110, 120)/the laser diode arrays (110, 120) is/are adapted to heat the respective heating surfaces (12, 32) of the strip (30) and of the molded body (10) to different temperatures in the regions immediately ahead of a line of contact of the strip (30) with the molded body (10).

14. Device according to one of the preceding claims, **characterized in that** the contact pressure unit (40) is designed as a contact pressure roller (40), the outer surface of which is formed from an elastomeric material, with the result that the contact area between the contact pressure roller (40) and the strip (30) increases as the strip (30) is pressed onto the molded body (10) with an increasing force by means of the contact pressure roller (40).

15. Device according to one of the preceding claims, **characterized in that** the contact pressure unit (40) in the region that can be brought into contact with the strip (30) and with the molded body (10) is of a substantially transparent for the radiation emitted by the laser diode array (110, 120)/laser diode arrays (110, 120).

16. Device according to one of the preceding claims, **characterized in that** the reinforcing structure (20) is a supporting sleeve (20) of a pressurized container (1) and the molded body (10) is an inner container (10) of the pressurized container (1).

## Revendications

1. Dispositif de production d'une structure de renfort (20), laquelle comporte une bande (30) incluant une matière synthétique renforcée de fibres et thermoplastique, sur une surface de corps moulé (11), le dispositif possédant les caractéristiques suivantes :
- le dispositif comporte un appareil de pressage (40) destiné à presser la bande (30) sur la surface de corps moulé (11) ;
- la bande (30) peut être positionnée entre l'appareil de pressage (40) et la surface de corps moulé (11) de telle sorte qu'une portion de pressage (31) de la bande (30) peut être amenée en contact avec l'appareil de pressage (40) et la surface de corps moulé (11) de sorte qu'une force peut être appliquée à la bande (30) au moyen de l'appareil de pressage (40) en direction de la surface de corps moulé (11) ;
- le dispositif comporte un appareil de déplacement et/ou de rotation (60) qui est couplé en mouvement avec le corps moulé (10) et/ou avec l'appareil de pressage (40), de sorte qu'un mouvement relatif et/ou une rotation relative du corps moulé (10) par rapport à l'appareil de pressage (40) puisse être obtenu, l'appareil de pressage (40) se déplaçant dans un sens de mouvement relatif (R1) par rapport à la surface de corps moulé (11) et la bande (30) étant tirée dans un sens de traction (R2) par rapport à l'appareil de pressage (40) ;
- le dispositif comporte au moins un réseau de diodes laser (110, 120) doté d'une pluralité de diodes laser (111) destinées à irradier une surface de chauffage (32) de la bande (30) disposée en amont de la zone de pressage (31) de la bande (30) dans le sens de traction (R2) et/ou une surface de chauffage (12) du corps moulé (10) disposée en aval de la zone de pressage (31) dans le sens de mouvement relatif (R1) ;
- la bande (30), dans la zone de sa surface de chauffage (32), et/ou la surface de corps moulé (11), dans la zone de sa surface de chauffage (12), peuvent être fondues localement par irradiation au moyen du réseau de diodes laser (110, 120), de sorte que la bande (30) peut être attachée au corps m (10) par pressage de la bande (30) sur la surface de corps moulé (11) au moyen de l'appareil de pressage (40),
le dispositif étant **caractérisé en ce que** les vecteurs de direction de rayonnement d'au moins deux diodes laser (111) ne sont pas orientés parallèlement les uns aux autres et sont dirigés les uns sur les autres en direction de la surface de chauffage (12, 32) / des surfaces de chauffage (12, 32).

2. Dispositif selon l'une des revendications précédentes, **caractérisé par** les caractéristiques suivantes :
- le dispositif comporte un module d'irradiation (100) qui comprend le réseau de diodes laser (110, 120) ;
- le module d'irradiation (100) possède au moins deux surfaces de rayonnement (101, 102, 103) qui font respectivement face à la surface de chauffage (32) de la bande (30) et/ou à la surface de chauffage (12) du corps moulé (10) ;
- dans chacune des surfaces de rayonnement (101, 102, 103) est disposée au moins une diode laser (111) du réseau de diodes laser (110, 120), le vecteur de direction de rayonnement de la diode laser (111) étant orienté parallèlement au vecteur normal de la surface de rayonnement (101, 102, 103) ; et
- un angle formé par deux surfaces de rayonnement (101, 102, 103) est modifiable.

3. Dispositif selon l'une des revendications précédentes, **caractérisé par** les caractéristiques suivantes :
- le dispositif comporte un module d'irradiation (100) qui comprend le réseau de diodes laser (110, 120) ;
- le module d'irradiation (100) possède au moins deux surfaces de rayonnement (101, 102, 103) qui font respectivement face à la surface de chauffage (32) de la bande (30) et/ou à la surface de chauffage (12) du corps moulé (10) ;
- dans chacune des surfaces de rayonnement (101, 102, 103) est disposée au moins une diode laser (111) du réseau de diodes laser (110, 120), le vecteur de direction de rayonnement de la diode laser (111), les vecteurs de direction de rayonnement des diodes laser (111) étant orienté(s) parallèlement au vecteur normal de la surface de rayonnement (101, 102, 103) ; et
- les vecteurs normaux de la surface de rayonnement (101, 102, 103) ne sont pas orientés parallèlement les uns aux autres et sont dirigés les uns sur les autres en direction de la surface de chauffage (12, 32) / des surfaces de chauffage (12, 32).

4. Dispositif selon l'une des revendications précédentes, **caractérisé par** les caractéristiques suivantes :
- le dispositif comporte un module d'irradiation (100) qui comprend le réseau de diodes laser (110, 120) ;
- le module d'irradiation (100) possède au moins une surface de rayonnement (104) qui fait face à la surface de chauffage (32) de la bande (30) et/ou à la surface de chauffage (12) du corps moulé (10) ;
- la surface de rayonnement (104) / les surfaces de rayonnement (104) est/sont de configuration concave ; et
- les diodes laser (111) du réseau de diodes laser (110, 120) sont disposées espacées les unes des autres dans la surface de rayonnement (104) les vecteurs de direction de rayonnement respectifs des diodes laser (111) étant orientés parallèlement aux vecteurs normaux locaux de la surface de rayonnement (104) qui les entoure, de sorte que les vecteurs de direction de rayonnement d'au moins deux diodes laser (111) ne sont pas orientés parallèlement les uns aux autres et sont dirigés les uns sur les autres en direction de la surface de chauffage (12, 32) / des surfaces de chauffage (12, 32).

5. Dispositif selon l'une des revendications précédentes, **caractérisé en ce que** les diodes laser (111) du réseau de diodes laser (110, 120) espacées les unes des autres en étant au moins partiellement non équidistantes les unes des autres.

6. Dispositif selon l'une des revendications précédentes, **caractérisé en ce que** les diodes laser (111) du réseau de diodes laser (110, 120) sont réalisées sous la forme d'émetteurs émettant par la surface (111).

7. Dispositif selon l'une des revendications précédentes, **caractérisé en ce qu'**un optique de représentation par collimation est disposé à la suite du réseau de diodes laser (110, 120).

8. Dispositif selon l'une des revendications précédentes, **caractérisé en ce que** la puissance d'émission des diodes laser (111) individuelles du réseau de diodes laser (110, 120) peut être réglée séparément au moyen d'un appareil de commande (140).

9. Dispositif selon l'une des revendications précédentes, **caractérisé en ce que** le réseau de diodes laser (110, 120) est adapté pour émettre un champ de rayonnement qui produit une distribution d'intensité irrégulière sur la surface de chauffage (32) de la bande (30) de sorte que l'intensité du rayonnement sur la surface de chauffage (32) de la bande (30) diminue au moins par portions dans le sens de traction (R2).

10. Dispositif selon l'une des revendications précédentes, **caractérisé en ce que** le dispositif comporte en outre un appareil de chauffage (70) au moyen duquel la bande (30) qui se trouve en amont de la surface de chauffage (32) dans le sens de traction (R2) peut être chauffée à une température prédéfinie.

11. Dispositif selon l'une des revendications précédentes, **caractérisé par** les caractéristiques suivantes :
- le dispositif comporte, en plus du premier réseau de diodes laser (110), lequel est conçu pour chauffer la surface de chauffage (32) de la bande (30) qui doit être mise en contact avec le corps moulé (10), un deuxième réseau de diodes laser (120) ; et
- le deuxième réseau de diodes laser (120) comporte une pluralité de diodes laser (111) destinées à irradier un côté arrière de la bande (30) qui se trouve à l'opposé de la surface de chauffage (32) de la bande (30).

12. Dispositif selon l'une des revendications précédentes, l'au moins un réseau de diodes laser (110, 120) étant adapté pour irradier la surface de chauffage (12) du corps moulé (10) en aval de la zone de pressage (31) dans le sens de mouvement relatif (R1), **caractérisé en ce que** le réseau de diodes laser (110, 120) est en outre également adapté pour émettre un champ de rayonnement qui produit une distribution d'intensité irrégulière sur la surface de chauffage (12) du corps moulé (10) de sorte que l'intensité du rayonnement sur la surface de chauffage (12) du corps moulé (30) diminue au moins par portions dans le sens de mouvement relatif (R1).

13. Dispositif selon l'une des revendications précédentes, **caractérisé en ce que** le réseau de diodes laser (110, 120) / les réseaux de diodes laser (110, 120) est/sont en outre également adapté(s) pour chauffer les surfaces de chauffage (12, 32) respectives de la bande (30) et du corps moulé (10) à des températures différentes dans les zones qui se trouvent directement en amont d'une ligne de contact de la bande (30) avec le corps moulé (10).

14. Dispositif selon l'une des revendications précédentes, **caractérisé en ce que** l'appareil de pressage (40) est réalisé sous la forme d'un rouleau presseur (40) dont la surface extérieure est formée par un matériau élastomère, de sorte que lors du pressage de la bande (30) sur le corps moulé (10) au moyen du rouleau presseur (40), la surface de contact entre le rouleau presseur (40) et la bande (30) s'agrandit à mesure que la forme appliquée augmente.

15. Dispositif selon l'une des revendications précédentes, **caractérisé en ce que** l'appareil de pressage (40) est sensiblement transparent pour le rayonnement émis par le réseau de diodes laser (110, 120) / les réseaux de diodes laser (110, 120) dans la zone en un pouvant être amenée en contact avec la bande (30) et avec le corps moulé (10).

16. Dispositif selon l'une des revendications précédentes, **caractérisé en ce que** la structure de renfort (20) est une gaine de soutien (20) d'un récipient sous pression (1) et le corps moulé (10) un récipient intérieur (10) du récipient sous pression (1).
